# EUROPÄISCHE PATENTSCHRIFT

(11) **EP 3 386 814 B1**
(45) Veröffentlichungstag und Bekanntmachung des Hinweises auf die Patenterteilung: **14.08.2019**
(21) Anmeldenummer: 16798406.1
(22) Anmeldetag: 17.11.2016
(51) Int. Cl.: B60T 8/1761, B60T 8/172

(54) **VERFAHREN ZUM EINSTELLEN VON BREMSDRÜCKEN EINES FAHRZEUGS UND BREMSANLAGE ZUR DURCHFÜHRUNG DES VERFAHRENS**
METHOD FOR ADJUSTING BRAKE PRESSURES OF A VEHICLE, AND BRAKE SYSTEM FOR CARRYING OUT THE METHOD
PROCÉDÉ DE RÉGLAGE DE PRESSIONS DE FREINAGE D'UN VÉHICULE ET SYSTÈME DE FREINAGE POUR LA MISE EN OEUVRE DUDIT PROCÉDÉ

(30) Priorität: 09.12.2015 DE 102015015924; 27.10.2016 DE 102016013054
(43) Veröffentlichungstag der Anmeldung: 17.10.2018
(73) Patentinhaber: WABCO GmbH, 30453 Hannover (DE)
(72) Erfinder: ECKERT, Horst, 31547 Rehburg-Loccum (DE)
(74) Vertreter: Rabe, Dirk-Heinrich
(86) Internationale Anmeldenummer: PCT/EP2016/001916
(87) Internationale Veröffentlichungsnummer: WO 2017/097394

(56) Entgegenhaltungen:
- EP-A1- 2 093 113
- WO-A1-2008/006568
- DE-A1- 10 259 271
- DE-A1-102009 034 450

## Beschreibung

Die Erfindung betrifft ein Verfahren zum Einstellen von Bremsdrücken an pneumatisch betätigten Radbremsen eines Fahrzeugs gemäß dem Oberbegriff des Anspruchs 1. Außerdem betrifft die Erfindung eine Bremsanlage eines Fahrzeugs gemäß dem Oberbegriff des Anspruchs 19 sowie gemäß Anspruch 25 ein Fahrzeug mit einer solchen Bremsanlage.

Zum Abbremsen eines Kraftfahrzeugs werden die Räder des Kraftfahrzeugs gebremst. Insbesondere bei Nutzfahrzeugen weisen die Radbremsen der Räder jeweils Bremszylinder auf, wobei der gewünschte Bremsdruck in den Bremszylindern in der Regel pneumatisch erzeugt wird.

In einem Normalbremsmodus wird der Bremsdruck in Abhängigkeit einer vom Fahrer des Kraftfahrzeugs bestimmten Fahrerbremsanforderung eingestellt. In der Regel übermittelt der Fahrer des Kraftfahrzeugs seine Fahrerbremsanforderung durch Betätigung eines Bremspedals. Bei bekannten Bremsanlagen wird oft mittels des Bremspedals ein Betriebsbremsventil betätigt, welches die Versorgung der Bremszylinder aus einem Druckvorrat beherrscht.

Alternativ zum Normalbremsmodus wird der Bremsdruck von einer Bremssteuereinheit in einem Drucksteuermodus an den jeweiligen Radbremsen nach den Vorgaben der Bremssteuereinheit bei Feststellung entsprechender Bremsbedürfnisse eingestellt. Derartige Bremsbedürfnisse können beispielsweise Antiblockiereingriffe sein, wenn die Bremssteuereinheit das Vorliegen einer Blockierneigung bestimmter Räder feststellt. DE 10 2009 058 154 A1 offenbart eine derartige Bremsanlage, welche außerdem die Einstellung des Bremsdrucks im Drucksteuermodus bei Empfang einer von der Fahrerbremsanforderung des Fahrers unabhängigen externen Bremsanforderung, beispielsweise der Bremsanforderung eines Fahrerassistenzsystems, übernimmt. Fahrerassistenzsysteme als von der Bremssteuereinrichtung getrennt ausgeführte Systeme geben Signale entsprechend der gewünschten Bremsleistung an die Bremssteuereinheit der Bremsanlage aus, beispielsweise über einen Datenbus.

Bei der bekannten Bremsanlage führt die Bremssteuereinrichtung eine Steuerung der Bremsanlagen auf der Grundlage der Fahrerbremsanforderung und außerdem interne Regelungen wie Antiblockiereingriffe oder auch eine Stabilitätsregelung sowie der zusätzlichen externen Bremsanforderung durch. Die externe Bremsanforderung wird der Bremssteuereinheit als Sollverzögerungswert vorgegeben, das heißt als Wert, welcher die vom Fahrerassistenzsystem gewünschte Verzögerung des Kraftfahrzeugs repräsentiert. Treten im Drucksteuermodus sowohl externe Bremsanforderungen als auch eine Fahrerbremsanforderung auf, das heißt der Fahrer bremst zu der externen Bremsanforderung hinzu, so stellt die Bremssteuereinheit den Bremsdruck an den jeweiligen Bremsen entsprechend einem resultierenden Sollverzögerungswert der Fahrzeugverzögerung ein. Bei der bekannten Bremsanlage werden die Fahrerbremsanforderung und die externe Bremsanforderung additiv verknüpft. Alternativ soll bei der bekannten Bremsanlage in einem Modus "Maximum" von der Steuereinheit der Maximalwert aus dem von der Bremsanlage intern angeforderten Sollverzögerungswert aufgrund einer Fahrerbremsanforderung und eines extern angeforderten Sollverzögerungswerts gebildet werden. Eine extern angeforderte Bremsanforderung wird nur eingestellt, wenn sie höher ist als die interne Bremsanforderung.

Die Übernahme der Einstellung des Bremsdrucks im Drucksteuermodus durch eine Bremssteuereinheit bei Vorliegen einer Blockierneigung bestimmter Räder ist unter der Bezeichnung "Anti-Blockier-System"(ABS) bekannt. Bei jeder Bremsung kann nämlich nur eine dem Fahrbahnreibwert entsprechende Bremskraft genutzt werden. Übersteigt die eingesteuerte Bremskraft die maximal übertragbare Bremskraft an einem oder mehreren Rädern, beginnen diese zu blockieren, wodurch das Kraftfahrzeug instabil werden kann. Ein ABS-System überwacht permanent über Messsignale von Drehzahlsensoren die Drehzahl jedes Rades und ermittelt daraus den jeweiligen Radschlupf. Dies kann beispielsweise durch Vergleich der aus der Raddrehzahl ermittelten Radgeschwindigkeit mit einer (errechneten) Fahrzeugreferenzgeschwindigkeit erfolgen. Wird über den so ermittelten Radschlupf eine Blockierneigung des Rades erkannt, das heißt eine ABS-Schlupfgrenze ist erreicht oder überschritten, übernimmt die Bremssteuereinheit die Kontrolle über die Einstellung des Bremsdrucks. Dabei erfolgt in einem ersten Schritt eine Senkung des Bremsdrucks, um anschließend den Bremsdruck des betreffenden Rades entlang der Schlupfgrenze zu regeln. Dabei wird das Bremsmoment solange wieder erhöht, bis ein dem Fahrbahnreibwert entsprechendes Bremsmoment erreicht wird. Grundsätzlich soll dadurch das Fahrzeug nahezu optimal abgebremst werden und gleichzeitig die Stabilität und Lenkfähigkeit erhalten bleiben.

DE 3829951 A1 offenbart ein Verfahren zur Durchführung einer lastabhängigen Regelung des Bremsdrucks an einem Nutzfahrzeug, welche die Komponenten eines vorhandenen Anti-Blockier-Bremssystems (ABS) ausnutzt, um damit im Normalbremsmodus eine auch weit unterhalb der Blockiergrenze wirkende, automatische lastabhängige Bremsfunktion zu realisieren. Bei dem bekannten Verfahren soll der Bremsdruck und damit die Bremskraftverteilung achsspezifisch unterhalb der Blockiergrenze geregelt werden, wobei eine zwischenachsige Bremsdruckverteilung nach Maßgabe der Auswertung der von den Raddrehzahlgebern gelieferten Raddrehzahlsignalen in einem Schlupfbereich unterhalb des Bereichs, in dem die ABS-Funktion wirksam wird, automatisch geregelt wird.

WO 2008/006568 A1 offenbart ein Verfahren zur Steuerung des Bremsdrucks in einem elektronischen Bremssystem für ein zumindest teilweise drucksensorloses, ein Antiblockiersystem einschließendes Druckluft-Bremssystem in einem Nutzfahrzeug. Es umfasst die Schritte (a) Erfassen eines Verzögerungswunschs des Fahrers des Nutzfahrzeugs; (b) Berechnen eines Gesamtdrucks für eine Vorder- und eine Hinterachse des Nutzfahrzeugs; (c) Berechnen einer Druckverteilung für die Vorderachse und die Hinterachse; (d) Berechnen von Öffnungszeiten von Radbremsventilen; (e) Aussteuern des Bremsdrucks; (f) Ermitteln und Vergleichen des Radschlupfs an der Vorderachse und an der Hinterachse; und (g) Ausführen der Schritte (e) und (f), bis in Schritt (f) Gleichheit des Radschlupfs an der Vorderachse und an der Hinterachse ermittelt wird.

Tritt bei einem gattungsgemäßen Verfahren zur Einstellung des Bremsdrucks, beispielsweise gemäß DE 10 2009 058 154 A1, im Drucksteuermodus nach Empfang einer externen Bremsanforderung ein Regelungsbedarf des ABS-Systems auf, das heißt an mindestens einem Fahrzeugrad wird das Erreichen oder Überschreiten der Schlupfgrenze festgestellt und daher auf die Blockierneigung des betreffenden Rades geschlossen, übernimmt die Antiblockierfunktion die Kontrolle über die Einstellung des Bremsdrucks im Drucksteuermodus. Ein Auftreten der Bremsdrucksteuerung durch ABS während einer externen Bremsanforderung führt grundsätzlich zu Nachteilen. Die Einstellung des Bremsdrucks entsprechend der angeforderten Fahrzeugverzögerung wird erschwert und nicht zuletzt sinken die Sicherheit der Bremsung und der Fahrkomfort. Insbesondere kommt es immer wieder zu einem unerwünschten Rucken aufgrund plötzlicher Steigerung des Bremsdrucks.

Der vorliegenden Erfindung liegt die Aufgabe zugrunde, bei einer Einstellung des Bremsdrucks in einem Drucksteuermodus nach externer Bremsanforderung zuverlässig ein ruckfreies und stetiges Bremsverhalten des Fahrzeugs beziehungsweise eines Fahrzeuggespanns aus mehreren Fahrzeugen zu gewährleisten.

Diese Aufgabe wird erfindungsgemäß durch ein Verfahren zum Einstellen des Bremsdrucks mit den Merkmalen des Anspruchs 1 gelöst. Außerdem löst die Erfindung die Aufgabe durch eine Bremsanlage mit den Merkmalen des Anspruchs 19 sowie gemäß Anspruch 25 durch ein Fahrzeug mit einer solchen Bremsanlage zur Durchführung des erfindungsgemäßen Verfahrens.

Nach einer externen Bremsanforderung ermittelt die Bremssteuereinheit Steuersignale für die betreffenden Drucksteuerventile zur Umsetzung der externen Bremsanforderung im Drucksteuermodus, wobei erfindungsgemäß vor einer Freigabe der Steuersignale laufend aus Messsignalen von Drehzahlsensoren der Räder wenigstens ein Differenzschlupfwert als Differenz zwischen dem Schlupf zweier Achsen des Fahrzeugs ermittelt und der Differenzschlupfwert durch Anpassung wenigstens eines Steuersignals für die Drucksteuerventile wenigstens einer Radbremse einem vorgegebenen oder einstellbaren Soll-Differenzschlupfwert nachgeführt wird. Die Bremssteuereinheit führt somit vor einer Freigabe der ermittelten Steuersignale eine Supervision der zunächst zur Umsetzung der Bremsanforderung ermittelten Steuersignale durch, und zwar unter Berücksichtigung des Soll-Differenzschlupfwerts. Über die Anpassung der Steuersignale ändern sich durch die Veränderung des Bremsdrucks der betreffenden Radbremse die physikalischen Größen und das Drehverhalten des Rades während des Bremsvorgangs. Über die Veränderung des Bremsdrucks wird, ohne dessen Niveau kennen zu müssen, mittelbar ein wunschgemäßer Differenzschlupf zwischen zwei Achsen bzw. Rädern einstellt. Dadurch weisen die Räder zweier Achsen relativ zueinander ein gleiches, wunschgemäßes Drehverhalten auf.

Die Erfindung hat erkannt, dass während einer laufenden Bremsung aufgrund externer Bremsanforderung das Auftreten einer Blockierneigung aufgrund der üblicherweise höheren Priorität der Antiblockierregelung dazu führt, dass gemäß der Antiblockierfunktion wenigstens ein Rad oder eine Achse entlang der jeweiligen Schlupfgrenze geregelt wird und somit bis zum Ende eines Antiblockiereingriffs die maximal mögliche Bremskraft auf die Fahrbahn übertragen wird. Es treten jedoch beim Betrieb eines Fahrzeugs oft Zustände ein, bei denen nur sehr kurzfristig niedrige Reibverhältnisse, sogenannter µ-Sprung, und damit kurzfristig entsprechende Schlupfverhältnisse, welche zum Ansprechen der Antiblockierfunktion führen, so wird das Rad beziehungsweise die Achse und damit das gesamte Fahrzeug regelmäßig überbremst. Auch bei nur sehr kurzzeitigem µ-Sprung überträgt das entsprechende Rad beziehungsweise eine Achse für die gesamte Restdauer der Bremsung die maximal mögliche Bremskraft auf die Fahrbahn. Dies entspricht aber in den meisten Fällen nicht der externen Bremsanforderung, welche daher in der Regel nicht umgesetzt werden kann.

Durch die Erfindung wird einem aktiven Eingreifen der Bremssteuereinheit bei Vorliegen nur sehr kurzer Intervalle von Blockierneigung vorgebeugt, indem die Bremssteuereinheit im Drucksteuermodus nach externer Bremsanforderung vor einer Freigabe der ermittelten Steuersignale eine Supervision der Steuersignale anhand der Differenzschlupfverhältnisse durchführt. Durch die erfindungsgemäße Supervision der Steuersignale anhand von Differenzschlupfwerten werden während des gesamten Bremsvorgangs und jedem Berechnungszyklus im Drucksteuermodus dynamisch Bremsdrücke an den einzelnen Achsen bzw. Rädern einstellt. Dadurch wird mit individuell ermittelten Bremsdrücken an den Radbremsen, welche unmittelbar aus dem aktuell ermittelten zwischenachsigen Differenzschlupf hergeleitet und angepasst werden, über den gesamten Bremsvorgang ein Raddrehverhalten der Räder des Fahrzeugs relativ zueinander gemäß dem gewünschten und entsprechend vorgegebenen Differenzschlupf eingestellt. Dadurch wird stets eine optimale Bremskraftverteilung zwischen den Achsen bzw. Rädern und damit eine hohe Sicherheit im Fahrzeug gewährleistet: Ferner wird ein unerwünschtes Eingreifen des ABS solange ausgeschlossen und erfolgt so spät, wie es aufgrund der gegebenen physikalischen Bedingungen möglich ist. Es blockieren sämtliche Räder des Fahrzeugs gleichzeitig oder nahezu gleichzeitig.

In einer vorteilhaften Ausführung einer Bremsanlage umfassen die Drucksteuerventile jeweils ein Einlassventil zur Erhöhung des Bremsdrucks und ein Auslassventil zur Senkung des Bremsdrucks. Dadurch ist eine Möglichkeit zur besonders feinen Nachführung des Differenzschlupfwerts zweier Achsen nach dem vorgegebenen Soll-Differenzschlupfwert möglich, in dem das Steuersignal eines Einlassventils oder eines Auslassventils des Drucksteuerventils der gleichen Achse verändert wird.

Eine weitere Möglichkeit zur feinen Anpassung der Bremsdruckverteilung zur Einstellung eines wunschgemäßen Differenzschlupfes zwischen mindestens zwei Rädern steht dabei durch eine gleichzeitige Ansteuerung des Einlassventils und des Auslassventils desselben Drucksteuerventils bereit, also bei sich überschneidenden Steuerzeiten. Dabei kann durch Veränderung der Pulsmuster bei einer pulsmodulierten Ansteuerung der Einlass- und Auslassventile die gewünschte Veränderung der Bremsdruckverteilung erreicht werden. Alternativ oder zusätzlich wird das Steuersignal, beziehungsweise die Pulsmuster eines auf die jeweils andere Achse wirkenden Einlassventils oder Auslassventils verändert.

Auch die neu ermittelten Steuersignale beziehungsweise Pulsmuster unterliegen der erfindungsgemäßen Supervision durch Bewertung eines Differenzschlupfwerts und Nachführung des Differenzschlupfwerts nach einem vorgegebenen Soll-Differenzschlupfwert. Der Soll-Differenzschlupfwert wird in einer vorteilhaften Ausführungsform einstellbar vorgegeben.

Der Differenzschlupfwert wird mit dem Soll-Differenzschlupfwert als Führungsgröße geregelt. In einer Hauptschleife zur Einstellung werden Steuersignale für die Drucksteuerventile auf der Grundlage einer Regelung (closed loop) einer dynamischen Größe des Fahrzeugs, insbesondere der aktuellen Verzögerung, ermittelt und diese Steuersignale mit der erfindungsgemäßen Supervision überwacht. Dabei wird der zwischenachsige Differenzschlupfwert auf den Soll-Differenzschlupf eingeregelt. Der Bremsdruck wird über die Steuersignale gesteuert (open loop), die Werte von Puls- bzw. Taktzeiten der Ventile werden vorteilhaft vorgegebenen Tabellen entnommenen. Wenn die Regelziele Verzögerung und/oder Differenzschlupfwert nicht erreicht sind, wird "open loop" mittels einer Druckvariation durch die Ventile nachgesteuert.

Die Vorgabe des Soll-Differenzschlupfwerts erfolgt bei einer ausschließlichen Bremsung aufgrund einer externen Bremsanforderung vorteilhaft in Abhängigkeit der angeforderten Soll-Verzögerung des Fahrzeugs gemäß der externen Bremsanforderung. Bei Vorliegen einer kombinierten Bremsung aus externer Bremsanforderung und Fahrerbremsung hängt die Vorgabe des Soll-Differenzschlupfwerts von der resultierenden Soll-Verzögerung des Fahrzeugs ab, die sich auf Grundlage beider Bremsanforderungen ergibt. Alternativ ist der Soll-Differenzschlupfwert von der Ist-Verzögerung des Fahrzeugs abhängig.

Ein Soll-Differenzschlupfwert ist vorzugsweise so vorgegeben, dass in einem unteren Bereich der angeforderten Verzögerung die Hinterachse oder bei mehreren Hinterachsen eine der Hinterachsen gegenüber einer Vorderachse einen größeren Schlupf aufweist. Mit steigender Größe der Bremsanforderung oder der aktuellen Ist-Verzögerung des Fahrzeugs wird der vorgegebene Soll-Differenzschlupf in Richtung eines ausgeglichenen Werts zwischen der Hinterachse und der Vorderachse verändert, das heißt, dass der Soll-Differenzschlupf zunehmend reduziert ist, gegebenenfalls bis zum Erreichen des Wertes Null. In einer weiteren Ausführungsform der Erfindung ist der Soll-Differenzschlupfwert bei Bremsanforderungen im oberen Bereich angeforderter Verzögerungen kleiner Null, das heißt, dass bei hohen Verzögerungen die Vorderachse im Vergleich zu der Hinterachse einen höheren Schlupf aufweist, das heißt die Räder der Vorderachse mit geringeren Radgeschwindigkeiten drehen als die Räder der Hinterachse.

Vorteilhaft wird der Differenzschlupfwert unter Berücksichtigung wenigstens eines vorgegebenen Regelkriteriums bewertet. Abhängig von der Bewertung gibt die Bremssteuereinheit die ermittelten Steuersignale frei oder veranlasst die Regelung des Differenzschlupfwerts nach dem Soll-Differenzschlupfwert durch Anpassung wenigstens eines Steuersignals im Hinblick auf eine Reduzierung des Differenzschlupfwerts. Die Bewertung des Differenzschlupfwerts, das heißt der Differenz zwischen den Schlupfwerten zweier Achsen, erfolgt anhand eines Vergleichs des Differenzschlupfwerts mit dem Regelkriterium.

In einer vorteilhaften Ausführungsform der Erfindung wird der Bremssteuereinheit als Regelkriterium für die Bewertung des Differenzschlupfwerts wenigstens ein Schlupfschwellwert vorgegeben. Bei Überschreiten des Schlupfschwellwerts erfolgt eine aktive Nachführung des Differenzschlupfwerts nach dem Soll-Differenzschlupfwert durch Anpassung der Steuersignale. Dadurch wird der Bremsdruck an der jeweils angesteuerten Radbremse verändert. Dabei reicht ein einzelner Schlupfschwellwert für die Bewertung eines Differenzschlupfwerts aus, um in dieser Ausführungsform die Anpassung von Steuersignalen zu veranlassen.

Zur Nachführung des Differenzschlupfwerts wertet die Supervision die Tendenz der Veränderung des Differenzschlupfes aus. Hat beispielsweise eine bestimmte Achse einen positiven Differenzschlupf gegenüber der anderen Achse des betrachteten Achsenpaares, ist dem die Information entnehmbar, dass die betreffende Achse im Verhältnis zu der anderen Achse relativ überbremst ist. Sofern die Supervision Steuersignale für Einlassventile der zur Überbremsung neigenden Achse ermittelt, verhindert die Supervision die Umsetzung der betreffenden Pulsmuster mit denen die Achse, beziehungsweise wenigstens ein Rad der betreffenden Achse noch weiter in einen Überbremsungszustand geraten würde. Das zunächst ermittelte Pulsmuster für das Einlassventil wird für eine Umsetzung zunächst gesperrt und ein neues Pulsmuster im Hinblick auf eine Anpassung der Bremsdruckverteilung ermittelt. Die Bewertung des Differenzschlupfwerts erfolgt laufend.

In einer weiteren vorteilhaften Ausführungsform der Erfindung wird der Steuereinheit als Regelkriterium für die Bewertung des Differenzschlupfwerts ein Toleranzband mit einem oberen Schlupfschwellwert und einem unteren Schlupfschwellwert vorgegeben. Die Parametrierung des Toleranzbandes mit Schlupfschwellwerten kann im Voraus ermittelt sein oder auch nach Bedarf einstellbar sein. Bei Überschreiten des oberen Schlupfschwellwerts oder Unterschreiten des unteren Schlupfschwellwerts erfolgt eine Anpassung der Steuersignale zur Nachführung des Differenzschlupfwerts. Dabei wird der obere Schlupfschwellwert des vorgegebenen Toleranzbandes insbesondere zur Veränderung der Steuersignale beziehungsweise der Pulsmuster für die Einlassventile der zum Überbremsen neigenden Achse herangezogen. Der untere Schlupfschwellwert wird entsprechend insbesondere für die Supervision der Steuersignale von Auslassventilen herangezogen. Unterschreitet der ermittelte Differenzschlupfwert den unteren Schlupfschwellwert des Toleranzbandes, so wird das zunächst ermittelte Steuersignal für Auslassventile nicht umgesetzt und vielmehr eine Neuberechnung der Steuersignale durchgeführt.

Die Supervision stellt sicher, dass Steuersignale für Einlassventile nur bei Differenzschlupfwerten unterhalb des oberen Schlupfschwellwerts zur Umsetzung freigegeben werden. Entsprechend werden Steuersignale für Auslassventile nur bei Ermittlungen von Differenzschlupfwerten im Rahmen der Supervision oberhalb des unteren Schlupfschwellwerts zur Umsetzung durch die Auslassventile freigegeben.

Vorteilhaft werden zwei mit jeweils einem unteren Schlupfschwellwert und einem oberen Schlupfschwellwert parametrierbare Toleranzbänder zur Bewertung des Differenzschlupfwerts vorgegeben. Ein erstes Toleranzband wird dabei im Drucksteuerbetrieb mit externen Bremsanforderungen ohne aktive Dauerbremsen herangezogen. Das zweite Toleranzband wird bei Drucksteuerbetrieben herangezogen, wenn aktive Dauerbremsen, beispielsweise Motorbremsen, an der betreffenden Achse, aktiv sind. Im Fall einer externen Bremsanforderung unterscheidet die Bremssteuereinheit dabei, ob eine Dauerbremse an einer der Achsen aktiv ist oder nicht und legt der Supervision der ermittelten Steuersignale das jeweils vorgesehene Toleranzband zugrunde. Auf diese Weise kann eingestellt werden, dass bei aktiver Dauerbremse ein höherer oberer Schlupfwert zugrunde gelegt wird, so dass beispielsweise Aspekte eines Verschleißes von Bremsbelägen berücksichtigt werden können.

Eine Verhinderung unerwünschter Antiblockiereingriffe ist durch eine repräsentative Supervision der Steuersignale bei Fahrzeugen mit mehr als zwei Achsen gegeben, indem Differenzschlupfwerte für mehrere Achsen jeweils bezogen auf eine in allen Achsenpaaren berücksichtigte Referenzachse ermittelt werden. Diese in allen Differenzschlupfwerten berücksichtigte Referenzachse ist vorzugsweise die Vorderachse.

In einer vorteilhaften Ausführungsform sind die Bremskreise der Drucksteuerventile über Ansteuerung jeweils eines Aktivierungsventils pro Bremskreis mit einem Druckmittelvorrat verbindbar. Diese Aktivierungsventile werden von der Bremssteuereinheit angesteuert und geschaltet. Bei Beendigung des Drucksteuermodus wird das Aktivierungsventil des betreffenden Bremskreises von der Bremssteuereinheit in die Schließstellung gebracht, wodurch die Verbindung der angeschlossenen Drucksteuerventile mit dem Druckmittelvorrat getrennt ist. Vorteilhaft ist dabei jeder Achse ein separater Bremskreis zugeordnet, dessen Radbremsen jeweils von dem Bremskreis versorgt werden.

Die Erfindung ist insbesondere bei Fahrzeugen vorteilhaft, welche mit pneumatisch betätigbaren Radbremsen ausgestattet sind. Das Fahrzeug ist dabei vorteilhaft ein Kraftfahrzeug, also ein solches Fahrzeug, welches mit Motorkraft angetrieben wird, oder ein Anhängefahrzeug für Kraftfahrzeuge. Verwendet wird die Erfindung bevorzugt bei Nutzfahrzeugen und Fahrzeugkombinationen mit einem Kraftfahrzeug, welches in der Fahrzeugkombination als Zugfahrzeug bezeichnet wird, und einem oder mehreren Anhängefahrzeugen. Ein Anhängefahrzeug weist in der Regel seinerseits ein eigenes Bremssystem auf, welches Vorgaben der Bremssteuereinheit des Zugfahrzeugs umsetzt, beispielsweise eine Sollverzögerung oder einen Sollbremsdruck einstellt. Ferner können Anhängefahrzeuge mit einem Fahrerassistenzsystem ausgestattet sein, das der Bremssteuereinheit des Zugfahrzeugs externe Bremsanforderungen vorgibt. Ein Nutzfahrzeug ist ein Kraftfahrzeug, das nach seiner Bauart und Einrichtung zum Transport von Personen oder Gütern oder zum Ziehen von Anhängefahrzeugen bestimmt ist.

Bei einer Fahrzeugkombination, bei der zwischen den Teilfahrzeugen eine Datenübertragung stattfindet, beispielsweise über eine CAN-Schnittstelle, ist eine differenzschlupfabhängige Anhängerbremsdrucksteuerung über die Bremssteuereinheit des Zugfahrzeugs möglich, wenn ein elektronisches Bremsmodul eines Anhängefahrzeugs zur Ansteuerung der Drucksteuerventile der Anhängerachsen mit der Bremssteuereinheit signalübertragend verbunden ist.

Dabei wird über die CAN-Schnittstelle zumindest ein Raddrehzahlsignal, z. B. eine Radgeschwindigkeit zumindest eines Rades des Anhängefahrzeugs, zur Bremssteuereinheit des Kraftfahrzeugs bzw. Zugfahrzeugs hin übertragen. Die Bremssteuereinheit des Zugfahrzeugs ermittelt einen differenzschlupfabhängigen Anhängerbremsdruck und steuert diesen aus beziehungsweise erteilt einem Bremsmodul des Anhängefahrzeugs entsprechende Vorgaben, wodurch das Bremsmodul den gewünschten Bremsdruck an den Radbremsen des Anhängefahrzeugs einstellt. Damit wird vorteilhaft der Differenzschlupf zwischen den Rädern bzw. einer Achse des Anhängers und der Referenzachse des Zugfahrzeugs, das heißt vorteilhaft der Vorderachse, ermittelt und für die erfindungsgemäße Druckeinstellung herangezogen.

Vorteilhaft umfasst die Bremsanlage ein zusätzliches Anhänger-Drucksteuerventil zur Einstellung des Anhänger-Bremsdrucks, welches von der Bremssteuereinheit des Zugfahrzeugs ansteuerbar ist und im Zugfahrzeug angeordnet an ein Anhängerkontrollventil des Zugfahrzeugs angeschlossen ist. Auf diese Weise ist der aktuell optimale Anhänger-Bremsdruck zur Umsetzung der Bremsbedürfnisse mit geringem baulichem Aufwand für Kommunikation des zum Zugfahrzeug gehörenden Teils der Bremsanlage des Fahrzeuggespanns und des zum Anhängefahrzeug gehörenden Teils der Bremsanlage einstellbar. Die Bremssysteme des Zugfahrzeugs und der Anhängefahrzeuge können weitgehend autark arbeiten und gleichzeitig im Rahmen der erfindungsgemäßen Einstellung des Bremsdrucks zusammenwirken. Das Bremsmodul des Anhängefahrzeugs leitet zusätzlich zu seiner genuinen Funktion die von der Bremssteuereinheit des Zugfahrzeugs benötigten Informationen über das Drehverhalten der Räder oder Achsen des Anhängefahrzeugs weiter.

In einer vorteilhaften Ausführungsform der Erfindung wird zur Bestimmung der Bremsdrücke in einem Fahrzeuggespann aus einem Kraftfahrzeug und wenigstens einem Anhängefahrzeug insbesondere zur Umsetzung externer Bremsanforderungen von den Anhängerachsen, d.h. den Achsen eines Anhängers, diejenige Anhängerachse bestimmt, welche aktuell den geringsten Schlupf aufweist. Die Informationen über den aktuellen Schlupf einer Anhängerachse wird laufend aus den Drehzahlmesswerten der Räder des betreffenden Anhängefahrzeugs ermittelt. Diejenige Anhängerachse mit den größten Drehzahlen ist gleichzeitig diejenige Anhängerachse mit dem geringsten Schlupf. Anders ausgedrückt ist die Stellachse diejenige Anhängerachse, welche wahrscheinlich von allen Anhängerachsen die größte Achslast zu tragen hat und daher in der Regel für eine gewünschte Verzögerung des Fahrzeugs den größten Bremsdruck benötigt.

Ausschließlich für die ermittelte Anhängerachse mit dem aktuell geringsten Schlupf, welche hier als Stellachse bezeichnet werden soll, wird ein Anhänger-Differenzschlupfwert entsprechend der Differenz des Schlupfs der Referenzachse des Zugfahrzeugs und des Schlupfs der Stellachse des Anhängefahrzeugs ermittelt. Der Anhänger-Differenzschlupfwert wird durch die erfindungsgemäße Einstellung des Bremsdrucks an den Bremsen des Anhängefahrzeugs (Anhänger-Bremsdruck) nachgeführt, insbesondere geregelt.

An den Radbremsen der als Stellachse ermittelten Anhängerachse bleiben die Einlassventile der jeweiligen Drucksteuerventile geöffnet, d. h. werden nicht zwecks Schließens angesteuert, so dass der Anhänger-Bremsdruck ausschließlich an den betreffenden Radbremsen der Stellachse eingestellt wird.

An den Radbremsen der übrigen Anhängerachsen werden die Einlassventile der jeweiligen Drucksteuerventile nach einem Startzeitpunkt nach Vorgabe einer externen Bremsanforderung geschlossen, d. h. angesteuert, so dass bis auf weiteres kein weiterer Druckanstieg erfolgen kann. Das Schließen der Drucksteuerventile erfolgt dabei vorteilhaft über das Bremsmodul des Anhängefahrzeugs. Für den Startzeitpunkt nach Beginn der Verzögerungswirkung bei einer Bremsung ist vorteilhaft eine bestimmte Startbedingung vorgegeben, beispielsweise ein bestimmter Verzögerungswert wie etwa 1 m/s². Alternativ oder zusätzlich signalisiert die Bremssteuereinheit des Zugfahrzeugs dem Bremsmodul 66 des Anhängefahrzeugs als Startbedingung eine Anpassung der Steuersignale zur Nachführung des Differenzschlupfwerts. Die Bremssteuereinheit signalisiert ein aktives Eingreifen der Supervision in die Ermittlung der Steuersignale für das Zugfahrzeug und das Bremsmodul des Anhängefahrzeugs erfasst ein entsprechendes Signal der Bremssteuereinheit des Zugfahrzeugs als Startbedingung. Die Ermittlung der Stellachse kann schon vor dem Eintritt der Startbedingung erfolgen, bspw. beginnend mit erstem Empfang einer externen Bremsanforderung. In der Regel steht sie dann -ermittelt auf Basis von gefilterten Messsignalen der Drehzahlsensoren- unmittelbar zum Startzeitpunkt des erfindungsgemäßen Verfahrens zur Verfügung.

Der Schlupf an der Stellachse bzw. eine den Schlupf repräsentierende Schlupf-Information, beispielsweise die Drehzahl oder die Geschwindigkeit, wird der Bremssteuereinheit des Zugfahrzeugs mitgeteilt, welche auf der Grundlage dieser Information bzw. Informationen die erfindungsgemäße Ermittlung des Anhänger-Differenzschlupfwerts zur Referenzachse Zugfahrzeug und die Nachführung des Differenzschlupfwerts nach einem vorgegebenen Sollwert übernimmt und entsprechende Bremsdrücke bestimmt.

In bevorzugter Ausführungsform der Erfindung erfolgt die Mitteilung der den Schlupf an der ausgewählten Stellachse repräsentierenden Information nach der Anforderung von Bremsleistung durch das Zugfahrzeug. Vorteilhaft informiert die Bremssteuereinheit des Zugfahrzeugs dabei das Bremssystem des Anhängefahrzeugs über die Aktivierung der Bestimmung von Bremsdrücken unter erfindungsgemäßer Supervision, beispielsweise durch Zuleitung eines entsprechenden Signals.

Durch die erfindungsgemäße Vorgehensweise der Ermittlung einer Stellachse von ausschließlicher Nachführung des Differenzschlupfwerts an dieser Stellachse ist ein optimaler Kompromiss erreicht zwischen dem Bedürfnis der Verbesserung des Beitrags der Radbremsen des Anhängefahrzeugs zur Umsetzung der angeforderten Sollverzögerung des Fahrzeuggespanns einerseits und andererseits dem Sicherheitsbedürfnis, die Bremssysteme der Teilfahrzeugen des Fahrzeuggespanns möglichst wenig zu vermischen. Zudem muss die Bremssteuereinheit des Zugfahrzeugs nur wenig Information des Anhängefahrzeugs für die erfindungsgemäße Bestimmung der Bremsdrücke unter Supervision der Steuersignale für die beteiligten Drucksteuerventile einlesen. Es müssen lediglich die Drehzahlsignale oder Schlüpfe der Räder der als Stellachse bestimmten Anhängerachse zur Bremssteuereinheit des Zugfahrzeugs übertragen werden bzw. sogar nur ein das Drehverhalten bzw. Bremsverhalten beider Räder der Stellachse repräsentierendes einzelnes Drehzahlsignal bzw. einzelner Schlupf. Die Übertragung der Information zum Drehverhalten an der Stellachse erfolgt insbesondere über die CAN-Schnittstelle.

Viele Teiloperationen der erfindungsgemäßen Einstellung des Bremsdrucks an den Anhängerachsen können durch das Bremssystem des Anhängefahrzeugs beziehungsweise dessen elektronisches Bremsmodul erfolgen, beispielsweise die Ermittlung der Stellachse aus den Drehzahlsignalen der Anhängerachsen.

Durch das (vorübergehende) Schließen der Einlassventile an der wenigstens einen weiteren Anhängerachse (neben der als Stellachse ermittelten Anhängerachse) wird an der betreffenden Anhängerachse ein weiterer unerwünschter Anstieg des Bremsdrucks unterbunden. Das Bremsmodul des Anhängefahrzeugs kann somit vorübergehend eine relative Minderbremsung selbsttätig veranlassen, d.h. eine gegenüber dem im Normalbremsmodus (der Fahrer bremst) zur Wirkung gelangende reduzierte und dadurch nach Schlupfkriterien angepasste und dadurch optimierte Bremswirkung der eigenen Achsen. Dadurch ist ein erheblicher Gewinn an Fahrsicherheit erzielt.

Vorteilhaft wird der Schaltzustand der Einlassventile überwacht und der geschlossene Schaltzustand der Einlassventile, das heißt die aktive Ansteuerung der Einlassventile, beendet und gegebenenfalls wieder eingeschaltet in Abhängigkeit einer Bewertung des zeitlichen Verlaufs der Differenz des Schlupfs der jeweiligen Anhängerachse und dem Schlupf der Stellachse mit wenigstens einer vorgegebenen Schaltschwelle für den Anhänger-Differenzschlupf zwischen den Anhängerachsen. Ändert sich ab dem Zeitpunkt des Schließens der Einlassventile einer Anhängerachse im weiteren zeitlichen Lauf der Bremsung der Differenzschlupf zweier Anhängerachsen annähernd kontinuierlich in Richtung eines Differenzschlupfs von Null, verbleibt es im Schaltzustand geschlossener Einlassventile.

Eine erste Schaltschwelle bei der Bewertung des Differenzschlupfs zwischen einer Anhängerachse und der Stellachse des Anhängefahrzeugs wird vorteilhaft als ein Erreichen und Überschreiten einer Nulllinie des Anhänger-Differenzschlupfs um einen Toleranzschlupfwert vorgegeben, beispielsweise ein Toleranzschlupfwert von 0,5 %. Die Nulllinie entspricht dabei ausgeglichenen Schlupfverhältnissen zwischen den betrachteten Achsen, das heißt, es liegt ein Anhänger-Differenzschlupf von Null vor. Ein prozentualer Toleranzschlupfwert von beispielsweise 0,5 % bezieht sich dabei auf die Definition des Schlupfs in der Dimension (Hilfsmaßeinheit) Prozent gemäß der Formel (n1 - n2) / n1 x 100 %, wobei die Variable "n" die Drehzahl einer Achse bezeichnet. Alternativ kann in der Formel statt der Drehzahl "n" die Geschwindigkeit "v" der Räder einer Achse Verwendung finden. Entsprechend werden die Einlassventile der Drucksteuerventile der betreffenden Anhängerachse nach erfolgtem erstmaligen Schließen zum Startzeitpunkt erstmalig wieder geöffnet, wenn durch den Differenzschlupf nach dem Startzeitpunkt ein Differenzschlupf von Null, d.h. die Nulllinie erreicht wurde und zuzüglich ein Betrag eines Differenzschlupfs entsprechend des Toleranzschlupfwerts von beispielsweise 0,5 % überschritten wurde. Liegt im weiteren zeitlichen Verlauf der Bremsung nach dem Startzeitpunkt eine kontinuierlich weiter ansteigende Bremsanforderung vor, werden in der Folge die Schaltzustände der Einlassventile der Drucksteuerventile der betreffenden Anhängerachse jeweils nach Vorzeichenwechsel des Anhänger-Differenzschlupfs bei Erreichen des Toleranzschlupfwerts gewechselt, das heißt die Einlassventile im Wechsel wieder geöffnet und geschlossen. Sie werden dabei geöffnet, wenn der Anhänger-Differenzschlupf das andere Vorzeichen aufweist als zum Startzeitpunkt der Bremsung vorlag und weiterhin seit dem letzten Schaltzustandswechsel die Nulllinie erreicht und zuzüglich um den Toleranzschlupfwert von beispielsweise 0,5 % überschritten wurde. Die Einlassventile werden hingegen geschlossen, wenn der Differenzschlupf dasselbe Vorzeichen aufweist wie zum Startzeitpunkt der Bremsung vorlag und seit dem letzten Schaltzustandswechsel die Nulllinie erreicht und zuzüglich um den Toleranzschlupfwert von beispielsweise 0,5 % überschritten wurde.

In einer besonders vorteilhaften Ausführung des Verfahrens wird nachdem der Anhänger-Differenzschlupf die erste Schaltschwelle erreicht eine Tendenz der Bremsanforderung (externe Bremsanforderung oder resultierende Bremsanforderung) berücksichtigt und im Fall abnehmender Bremsanforderung ein erweiterter Toleranzbereich für den Anhänger-Differenzschlupf vorgegeben und die Einlassventile der Anhängerachsen abgesehen von der Regelachse bis zum Verlassen des erweiterten Toleranzbereichs geschlossen gehalten. Der erweiterte Toleranzbereich hat beispielsweise zweimal den Wert des Toleranzschlupfwerts 80 beiderseits der Nulllinie 86. Im weiteren zeitlichen Verlauf der Bremsung nach Überschreiten der ersten Schaltschwelle werden demnach die Einlassventile der betreffenden Anhängerachse nur dann geöffnet, d. h. vom Bremsmodul des Anhängefahrzeugs nicht oder nicht mehr aktiv angesteuert, wenn sich seit dem unmittelbar zurückliegenden Berechnungszyklus des Bremsmoduls des Anhängefahrzeugs die Bremsanforderung (externe Bremsanforderung oder resultierende Bremsanforderung) erhöht hat. Ist dieses nicht der Fall, das heißt der Wert der Bremsanforderung ist gleich geblieben oder gesunken, werden die Einlassventile der betreffenden Anhängerachse weiter geschlossen gehalten, das heißt vom Bremsmodul des Anhängefahrzeugs aktiv angesteuert.

Als zweite Schaltschwelle wird für den Fall, dass nach Schließen der Einlassventile der Betrag des Anhänger-Differerizschlupfs zunimmt, ein Anfangswert des Anhänger-Differenzschlupfs zum Zeitpunkt des Schließens der Einlassventile herangezogen. Hierzu wird der aktuelle Wert des Anhänger-Differenzschlupfs zum Zeitpunkt des Schließens der Einlassventile erfasst und abgespeichert. Die zweite Schaltschwelle wird als eine Zunahme des Anfangswerts des Anhänger-Differenzschlupfs zum Zeitpunkt des Schließens der Einlassventile um einen vorgegeben Anteil dieses Anfangswerts oder einen vorgegebenen Toleranzschlupfwert bestimmt. Durch diese Schaltschwelle werden unerwünschte Überbremsungen ausgeschlossen.

Für den Fall eines nach erfolgtem Schließen der Einlassventile im weiteren zeitlichen Verlauf der Bremsung um mindestens den Toleranzschlupfwert geringer werdenden Betrag des Anhänger-Differenzschlupfs wird anstelle der zweiten Schaltschwelle der Anfangswert des Anhänger-Differenzschlupf zum Startzeitpunkt des Schließens der Einlassventile als dritte Schaltschwelle vorgegeben. Verringert sich also der Betrag des Differenzschlupfs zumindest zeitweise vom Anfangswert des Anhänger-Differenzschlupfs, der zum Startzeitpunkt, das heißt dem Eintritt einer bestimmten Startbedingung vorlag, in Richtung der Nulllinie , vorzugsweise um wenigstens den Betrag des Toleranzschlupfwerts von beispielsweise 0,5 %, und wird im weiteren Verlauf der Bremsung wieder größer, wird als dritte Schaltschwelle der abgespeicherte Anhänger-Differenzschlupf zum Zeitpunkt des erstmaligen Schließens der Einlassventile vorgegeben. Die dritte Schaltschwelle weist das gleiche Vorzeichen wie der Anhänger-Differenzschlupf zum Startzeitpunkt auf. Steigt also der Betrag des Anhänger-Differenzschlupfs nach einem anfänglichen Sinken um wenigstens den Betrag des vorgegebenen Toleranzschlupfwerts wieder an und erreicht den abgespeicherten Anfangswert des Anhänger-Differenzschlupfs, der zum Startzeitpunkt vorlag, so wird der geschlossene Schaltzustand der Einlassventile an den betreffenden Anhängerachsen beendet. Auf diese Weise ist die Situation erfasst, dass sich der Anhänger-Differenzschlupf zwar zunächst in Richtung Null verringert, ein Differenzschlupf von Null aber nicht erreicht wird und anschließend wieder der Wert des Anhänger-Differenzschlupfs erreicht wird, der zum Zeitpunkt des Schließens der Einlassventile vorlag. Dadurch wird ausgeschlossen, dass die Einlassventile für unerwünscht lange Zeiträume geschlossen bleiben.

Ausführungsbeispiele der Erfindung sind nachstehend anhand der Zeichnung näher erläutert. Es zeigen:
- Fig. 1: ein pneumatisches und elektrisches Schema einer Bremsanlage eines Nutzfahrzeugs,
- Fig. 2: ein pneumatisches und elektrisches Schema einer Bremsanlage eines Fahrzeuggespanns mit Anhängefahrzeug,
- Fig. 3: ein Flussschaubild eines ersten Ausführungsbeispiels eines Verfahrens zum Einstellen der Bremsdrücke in einer Bremsanlage gemäß Fig. 1 oder 2,
- Fig. 4: ein Flussschaubild eines zweiten Ausführungsbeispiels eines Verfahrens zum Einstellen der Bremsdrücke in einer Bremsanlage gemäß Fig. 1 oder 2,
- Fig. 5: ein Flussschaubild eines dritten Ausführungsbeispiels eines Verfahrens zum Einstellen der Bremsdrücke in einer Bremsanlage gemäß Fig. 1 oder 2,
- Fig. 6: ein pneumatisches und elektrisches Schema einer Bremsanlage eines Fahrzeuggespanns mit Anhängefahrzeug,
- Fig. 7: ein Flussschaubild eines Ausführungsbeispiels eines Verfahrens zum Einstellen der Bremsdrücke in einer Bremsanlage gemäß Fig. 6,
- Fig. 8, 9, 10: beispielhafte zeitbezogene Verläufe des Differenzschlupfwerts im Betrieb einer Bremsanlage gemäß Fig. 6.

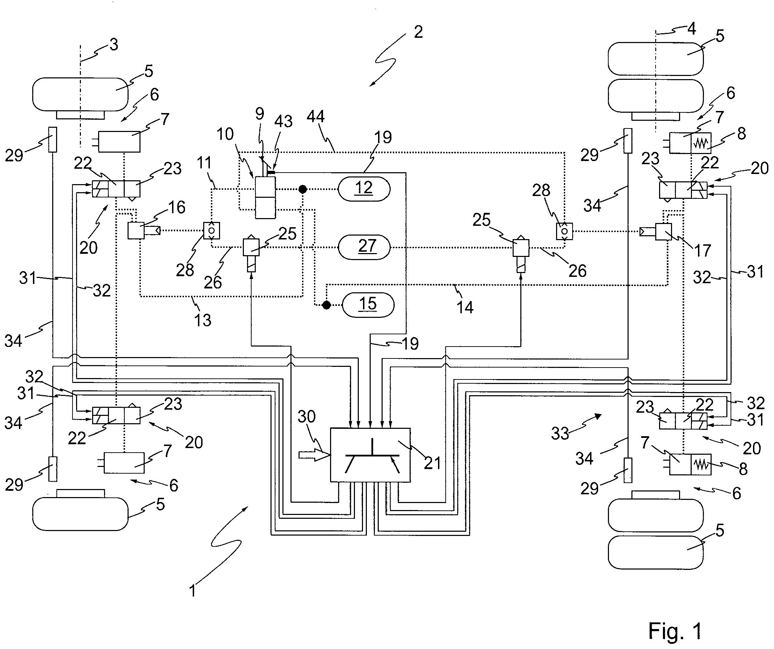

Fig. 1 zeigt einen elektrisch-pneumatischen Plan einer Bremsanlage 1 eines Fahrzeugs 2, nämlich eines Nutzfahrzeugs. Elektrische Leitungen sind mit Volllinien und pneumatische Leitungen mit punktierten Linien dargestellt. Das Fahrzeug 2 umfasst im gezeigten Ausführungsbeispiel zwei Achsen, nämlich eine Vorderachse 3 und eine Hinterachse 4, an denen jeweils beidseitig Räder 5 angeordnet sind. Zum Abbremsen der Räder 5 ist jedem Rad 5 eine Radbremse 6 zugeordnet. Die Radbremsen 6 sind pneumatisch betätigbar und weisen jeweils einen Bremszylinder 7 auf. Die Radbremsen 6 üben entsprechend dem jeweils im Bremszylinder 7 anliegenden pneumatischen Bremsdruck eine Bremskraft auf das drehende Rad 5 aus. An den Rädern 5 der Hinterachse 4 sind dabei Bremszylinder 7 mit Federspeichern 8 vorgesehen, welche einer Feststellbremse dienen.

In der Fahrerkabine des Fahrzeugs 2 ist ein Bremspedal 9 angeordnet, welches an ein Betriebsbremsventil 10 gekoppelt ist. Der Fahrer des Fahrzeugs 2 kann durch Betätigen des Bremspedals 9 pneumatischen Druck zu den Bremszylindern 7 durchschalten und somit die Radbremsen 6 betätigen. Hierzu beherrscht das Betriebsbremsventil 10 pneumatische Bremsleitungen 11, 44 zwischen den Druckmittelvorräten 12, 15 und den Bremszylindern 7.

Im gezeigten Ausführungsbeispiel sind die Radbremsen 6 der Vorderachse 3 einem gemeinsamen ersten Bremskreis 13 zugeordnet, während die Radbremsen 6 der Hinterachse 4 über einen zweiten Bremskreis 14 betätigbar sind. Der erste Druckmittelvorrat 12 ist dabei dem ersten Bremskreis 13 zugeordnet und über die Bremsleitung 11 an die Bremszylinder 7 der Vorderachse 3 angeschlossen. Der zweite Bremskreis 14 der Hinterachse 4 wird über einen zweiten Druckmittelvorrat 15 mit Druckmittel versorgt. Der zweite Bremskreis 14 ist analog dem ersten Bremskreis 13 aufgebaut, das heißt, dass die Bremsleitung 44 zwischen dem zweiten Druckmittelvorrat 15 zu den Radbremsen 6 der Hinterachse 4 über das Betriebsbremsventil 10 freigebbar ist und daher der Bremsdruck in Abhängigkeit von der Stellung des Bremspedals 9 einstellbar ist.

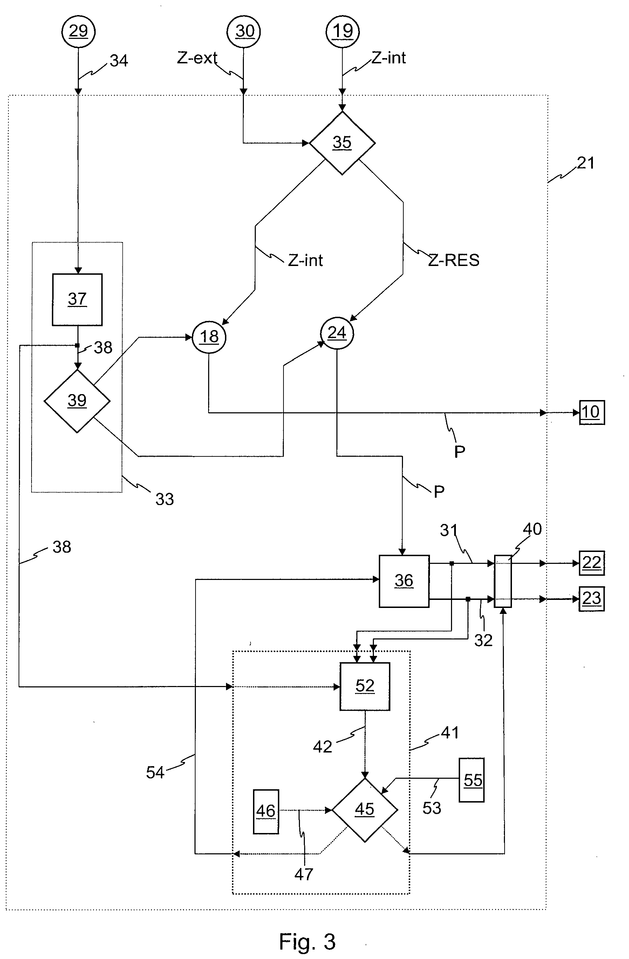

Im ersten Bremskreis 13 ist ein pneumatisch betätigbares Relaisventil 16 und analog im zweiten Bremskreis 14 ein Relaisventil 17 angeordnet. Die pneumatisch betätigbaren Relaisventile 16, 17 werden über den pneumatischen Druck aus dem jeweils angeschlossenen Druckmittelvorrat 12, 15 geöffnet. Wird das Betriebsbremsventil 10 geöffnet, schalten die Relaisventile 16, 17 anstehenden Bremsdruck zu den angeschlossenen Radbremsen 6 durch. In einem Normalbremsmodus (Bezugszeichen 18 in Fig. 3) ist der Bremsdruck in den Radbremsen 6 in Abhängigkeit der Fahrerbremsanforderung 19 einstellbar. Im Normalbremsmodus 18 hat daher der Fahrer des Fahrzeugs 2 über die Betätigung des Bremspedals 9 die volle Kontrolle über das Bremsverhalten des Fahrzeugs 2.

Jeder Radbremse 6 der Bremsanlage 1 ist ein Drucksteuerventil 20 zugeordnet, welche von einer Bremssteuereinheit 21 in einem Drucksteuermodus (Bezugszeichen 24 in Fig. 3) elektrisch angesteuert werden und zum Empfang von Steuersignalen 31, 32 mit der Bremssteuereinheit 21 signalübertragend verbunden sind. Die Drucksteuerventile 20 der Radbremsen 6 der Vorderachse 3 sind im ersten Bremskreis 13 und die Drucksteuerventile 20 der Hinterachse 4 im zweiten Bremskreis 14 angeordnet. Die Drucksteuerventile 20 sind jeweils eine Kombination von wenigstens zwei Magnetventilen, nämlich einem Einlassventil 22 und einem Auslassventil 23. Das Einlassventil 22 dient dabei prinzipiell zur Druckerhöhung beziehungsweise zum Halten des Drucks im Bremszylinder 7, während das Auslassventil 23 zur Reduzierung des Bremsdrucks geöffnet wird und den jeweils angeschlossenen Bremszylinder 7 entlüftet. Das Einlassventil 22 und das Auslassventil 23 sind im Ausführungsbeispiel 2/2-Wege-Ventile.

Die Bremssteuereinheit 21 ist dazu ausgebildet und konfiguriert, unabhängig von der Fahrerbremsanforderung 19 selbsttätig im Drucksteuermodus 24 auf den Bremsvorgang einzuwirken. Hierzu ermittelt die Bremssteuereinheit 21 auf der Grundlage der ihr zugeführten Informationen Steuersignale 31, 32 für die Drucksteuerventile 20, um das Bremsverhalten der einzelnen Radbremsen 6 einzustellen. Die Bremssteuereinheit 21 ermittelt dabei Steuersignale 31 für die Einlassventile 22 und Steuersignale 32 für die Auslassventile 23 und steuert die jeweiligen Ventile mit den ermittelten Steuersignalen 31, 32 an. Die Einlassventile 22 und die Auslassventile 23 werden pulsmoduliert gesteuert. Die Steuersignale 31, 32 entsprechen daher einem bestimmten Pulsmuster, welches die Bremssteuereinheit 21 zur Einstellung eines jeweiligen Bremsdrucks P vorgibt.

Im Normalbremsmodus 18 sind die Einlassventile 22 in die geöffnete und die Auslassventile 23 in die geschlossene Stellung geschaltet, so dass die Einstellung des Bremsdrucks P nicht beeinflusst wird.

Im Drucksteuermodus 24 übernimmt die Bremssteuereinheit 21 die Einstellung des Bremsdrucks der jeweiligen Radbremsen 6 durch entsprechende Ansteuerung der Drucksteuerventile 20. Jedem Bremskreis 13, 14 ist ein elektrisch betätigbares Aktivierungsventil 25 zugeordnet, welche von der Bremssteuereinheit 21 betätigbar sind. Jedes Aktivierungsventil 25 ist als 3/2-Wege-Ventil ausgebildet, wodurch die Druckleitung hinter dem Aktivierungsventil bedarfsweise entlüftet werden kann. Im Drucksteuerbetrieb 24 wird durch Ansteuerung der Aktivierungsventile 25 Bremsdruck zu den Drucksteuerventilen 20 durchgeschaltet. Im gezeigten Ausführungsbeispiel beherrschen die Aktivierungsventile 25 jeweils eine Druckleitung 26 von einem dritten Druckmittelvorrat 27 zu den Relaisventilen 16, 17. Durch Betätigung des Aktivierungsventils 25 des ersten Bremskreises 13 kann somit das Relaisventil 16 der Vorderachse 3 betätigt werden. Analog wird das Relaisventil 17 der Hinterachse 4 durch Betätigung des Aktivierungsventils 25 des zweiten Bremskreises 14 betätigt.

Das Betriebsbremsventil 10 und die Aktivierungsventile 25 sind jeweils über ein Doppelrückschlagventil 28 auf den pneumatischen Steuereingang des Relaisventils 16, 17 des jeweiligen Bremskreises 13, 14 gekoppelt.

Die Bremsanlage 1 umfasst ein Antiblockiersystem 33, dessen wesentliche Elemente die Bremssteuereinheit 21, die Drucksteuerventile 20 der Radbremsen 6 als Aktoren des Antiblockiersystems 33 sowie Drehzahlsensoren 29 sind, deren Messsignale 34 die Bremssteuereinheit 21 zur Ermittlung der Blockierneigung der Räder 5 heranzieht. Die Bremssteuereinheit 21 ermittelt aus den Messsignalen 34 der Drehzahlsensoren 29 Informationen über dynamische Zustandsgrößen der jeweiligen Räder 5, insbesondere den jeweiligen Schlupf (Bezugszeichen 34 in Fig. 3-5), um daraus auf eine Blockierneigung des betreffenden Rades 5 zu schließen. Bei Feststellen einer Blockierneigung eines oder mehrerer Räder 5 greift das Antiblockiersystem 33, das heißt die Bremssteuereinheit 21, welche die Antiblockierfunktion realisiert, im Drucksteuermodus 24 durch Steuerung des Bremsdrucks P an der betreffenden Radbremse 6 in den Bremsvorgang ein.

Durch Einstellung der Bremsdrücke im Drucksteuermodus 24 setzt die Bremssteuereinheit 21 nicht nur interne Bremsanforderungen um, welche auf der Grundlage der ihr zugeführten dynamischen Zustandsgrößen des Fahrzeugs vorgegeben sind, sondern auch externe Bremsanforderungen 30. Die externe Bremsanforderung 30 wird von einem Fahrerassistenzsystem vorgegeben. Unter einer externen Bremsanforderung 30 ist dabei die Anforderung von Bremsleistung durch ein oder mehrere Fahrerassistenzsysteme oder andere externe Systeme zu verstehen, welche aufgrund ihrer Funktion im Fahrzeug 2 ein Bremsmanöver anfordern. Bei Empfang einer externen Bremsanforderung 30 schaltet die Bremssteuereinheit 21 vom Normalbremsmodus 18 in den Drucksteuermodus 24 und übernimmt die Steuerung beziehungsweise Regelung der Bremsdrücke P an den einzelnen Rädern 5.

Wird die externe Bremsanforderung 30 zurückgenommen, das heißt, dass die Bremssteuereinheit 21 keine externe Bremsanforderung 30 mehr empfängt, so leitet die Bremssteuereinheit 21 in der Regel eine Beendigung des Drucksteuermodus 24 ein, sofern keine weitere Bremsanforderung vorliegt. Mit der Beendigung des Drucksteuermodus 24 erhält der Fahrer des Fahrzeugs 2 somit wieder die volle Kontrolle über die Betätigung der Radbremsen 6 im Normalbremsmodus 18.

Die Bremsanlage 1 umfasst einen Bremssignalgeber 43, welcher signalübertragend mit der Bremssteuereinheit 21 verbunden ist. Das Ausgangssignal des Bremssignalgebers 43 entspricht quantitativ der Fahrerbremsanforderung 19, wobei beispielsweise die Stellung oder ein Betätigungsweg des Bremspedals 9, ein Betätigungsweg eines Bauteils des Betriebsbremsventils 10 oder ein vom Betriebsbremsventil 10 ausgesteuerter Bremsdruck gemessen werden kann. Über die signalübertragende Verbindung wird der Bremssteuereinheit 21 die Fahrerbremsanforderung 19 mitgeteilt. Auf diese Weise ist die Bremssteuereinheit 21 in der Lage, im Drucksteuermodus 24 ein Hinzubremsen des Fahrers, das heißt eine zusätzliche und gleichzeitig zur externen Bremsanforderung 30 auftretende Fahrerbremsanforderung 19 zu berücksichtigen. Das Ausgangssignal des Bremssignalgebers 43 vermittelt der Bremssteuereinheit im Drucksteuermodus 24 quantitative Informationen über die Fahrerbremsanforderung 19. In den Ausführungsbeispielen gemäß Fig. 3 bis 5 wird der Bremssteuereinheit 21 eine vom Fahrer gewünschte interne Sollverzögerung Z-int vorgegeben, anhand welcher die Bremssteuereinheit 21 den entsprechenden Bremsdruck P ermittelt und einstellt.

Die Bremssteuereinheit 21 berücksichtigt sowohl die Fahrerbremsanforderung 19 als auch die externe Bremsanforderung 30 in einem Verfahren zur Bestimmung des Bremsdrucks P, welches nachstehend anhand von Fig. 3 beschrieben ist.

Im Normalbremsmodus 18 wird der Bremsdruck P allein in Abhängigkeit der Fahrerbremsanforderung 19 eingestellt. Die Fahrerbremsanforderung 19 wird der Bremssteuereinheit 21 (Fig. 1) durch einen die Fahrerbremsanforderung 19 repräsentierenden Größenwert vorgegeben. Im gezeigten Ausführungsbeispiel wird der Größenwert als interner Sollverzögerungswert Z-int vorgegeben. Wird die Fahrerbremsanforderung in einer anderen physikalischen Größe als die externe Bremsanforderung 30 eingegeben, so rechnet die Bremssteuereinheit 21 den Wert dieser Größen in einen quantitativ entsprechenden Sollverzögerungswert um, so dass interne und externe Bremsanforderungen in der gleichen physikalischen Dimension vorliegen und leicht verknüpfbar sind. Fig. 3, Fig. 4 und Fig. 5 zeigen Flussdiagramme von Ausführungsbeispielen für die Einstellung des Bremsdrucks P über eine Bremssteuereinheit 21. Im Normalbremsmodus 18 stellt die Bremsanlage 1 (Fig. 1) den Bremsdruck P über Betätigung des Betriebsbremsventils 10 ein. Empfängt die Bremssteuereinheit 21 eine externe Bremsanforderung 30, so wird in den Drucksteuermodus 24 umgeschaltet. Die Bremssteuereinheit 21 berücksichtigt in einer Moduserfassung 35 zur Entscheidung zwischen den Bremsmodi die zu berücksichtigenden Bremsanforderungen, nämlich die Fahrerbremsanforderung 19 und die externe Bremsanforderung 30. Liegt keine externe Bremsanforderung 30 vor, so wird der Bremsdruck P an den Radbremsen entsprechend der Fahrerbremsanforderung 19 im Normalbremsmodus 18 eingestellt. Im Normalbremsmodus 18 bleiben die Einlassventile 22 der Drucksteuerventile 20 geöffnet und die Auslassventile 23 geschlossen, wodurch der Fahrer des Fahrzeugs 2 die volle Kontrolle über das Bremsmanöver hat.

Empfängt die Bremssteuereinheit 21 eine externe Bremsanforderung 30, so stellt die Bremssteuereinheit 21 im Drucksteuermodus 24 an den Radbremsen 6 einen Bremsdruck P unter Berücksichtigung der externen Bremsanforderung 30 und einer gegebenenfalls gleichzeitigen Fahrerbremsanforderung 19 ein. Liegen sowohl externe Bremsanforderung 30 als auch eine Fahrerbremsanforderung 19 vor, beispielsweise wenn der Fahrer während des Drucksteuermodus 24 hinzubremst, so ermittelt die Bremssteuereinheit den einzustellenden Bremsdruck P unter Verknüpfung der Fahrerbremsanforderung 19 und der externen Bremsanforderung 30 zu einer resultierenden Bremsanforderung 56.

Die externe Bremsanforderung 30 wird der Bremssteuereinheit 21 als externer Sollverzögerungswert Z-ext vorgegeben. Der interne Verzögerungswert Z-int wird mit dem externen Verzögerungswert Z-ext zu einem resultierenden Verzögerungswert Z-RES verknüpft, im Ausführungsbeispiel addiert.

Nach Erfassung der Bremsanforderungen, also entweder eine ausschließlich externe Bremsanforderung 30 mit einem Sollverzögerungswert Z-ext oder eine resultierende Bremsanforderung 56 aus Fahrerbremsanforderung 19 und externe Bremsanforderung 30, erfolgt eine Ermittlung 36 der Steuersignale 31, 32 für das Einlassventil 22 beziehungsweise das Auslassventil 23, um den Bremsdruck P entsprechend der Vorgabe durch die Bremssteuereinheit 21 einzustellen. Bei der Ermittlung 36 der Steuersignale 31, 32 für die Drucksteuerventile 20 der Vorderachse 3 und der Hinterachse 4 werden neben der aktuellen Bremsanforderung Z-ext oder Z-RES weitere Mess- bzw. Ermittlungsgrößen berücksichtigt, beispielsweise die nach Fahrtantritt ermittelte Fahrzeugmasse, ein Achslastverhältnis zwischen Vorderachse 3 und Hinterachse 4, ein bei Fahrerbremsungen ermittelter Bremsenperformancefaktor, welcher die individuelle Bremsleistung an der jeweiligen Radbremse charakterisiert oder die durchschnittliche Bremsleistung aller das Fahrzeug abbremsenden Radbremsen. Durch die verschiedenen Einflussgrößen auf die Bestimmung der Steuersignale kommt es oft vor, dass die Steuersignale der Drucksteuerventile der Vorderachse 3 von denen der Hinterachse 4 abweichen, auch zwischen einzelnen Rädern, beispielsweise in bestimmten Situationen, wie einer externen Bremsanforderung.

Die Bremssteuereinheit 21 ist Bestandteil eines Antiblockiersystems 33, welches die Messsignale 34 der Drehzahlsensoren 29 auswertet, wobei anhand der Messsignale 34 eine Schlupfbestimmung 37 erfolgt. Bei der Schlupfbestimmung 37 werden für jedes Rad 5 des Fahrzeugs 2 der jeweilige Schlupf 38 bestimmt. Eine Aktivierung 39 schaltet in den Drucksteuermodus 24, wenn der ermittelte Schlupf 38 eine vorgegebene Schlupfgrenze überschreitet. Die Schlupfgrenze repräsentiert dabei den Zustand des betreffenden Rades, bei dem das Rad zum Blockieren neigt. Bei einer Aktivierung 39 der Antiblockierfunktion werden im Drucksteuermodus 24 Steuersignale 31, 32 für die Einlassventile 22, 23 erzeugt und der Bremsdruck P an dem zum Blockieren neigenden Rad 5 entlang der Schlupfgrenze geregelt.

Wird der Bremsdruck P aufgrund einer externen Bremsanforderung 30 bereits im Drucksteuermodus 24 eingestellt, so führt die Bremssteuereinheit 21 vor einer Freigabe 40 der Steuersignale für die Einlassventile 22 beziehungsweise Auslassventile 23 eine nachstehend näher erläuterte Supervision 41 der Steuersignale 31, 32 unter Berücksichtigung eines Differenzschlupfwerts 42 durch. Der Differenzschlupfwert 42 entspricht dabei der Differenz des Schlupfs 38 zweier Achsen 3, 4 des Fahrzeugs. Bei der Ermittlung der Differenzschlupfwerte 42 werden entweder unmittelbar sämtliche Schlüpfe 38 der Räder (Radschlüpfe) oder alle Achsschlüpfe berücksichtigt, die den Mittelwert der Radschlüpfe des linken und rechten Rades einer Achse darstellen, für die Supervision 41 eingelesen. Sind zwischenachsige Differenzschlupfwerte 42 bereits für andere Fahrerassistenzfunktionen ermittelt worden, so werden diese vorteilhaft für die Supervision 41 herangezogen.

Bei Fahrzeugen mit mehr als zwei Achsen werden mehrere zwischenachsige Differenzschlupfwerte 42 ermittelt und für die Supervision 41 herangezogen.

Dabei werden die Differenzschlupfwerte 42 für mehrere Achsen jeweils bezogen auf eine in allen Achsenpaaren berücksichtige Achse ermittelt. Eine derartige Referenzachse, auf die sich die Differenzschlupfwerte aller übrigen Achsen beziehen, ist vorzugsweise die Vorderachse 3. Der Differenzschlupfwert 42 wird in einer Differenzbestimmung 52 der Supervision 41 auf der Grundlage des Schlupfs 38 der jeweils betrachteten Achsen 3, 4 des Fahrzeugs ermittelt. Die Informationen zum jeweiligen Schlupf 38 werden von der Antiblockierfunktion, welche die Messsignale 34 der Drehzahlsensoren 29 ständig auswertet, bereitgestellt.

Bei der Supervision 41 erfolgt eine Bewertung 45 des wenigstens einen Differenzschlupfwerts 42 unter Berücksichtigung einer Vorgabe 55 eines Soll-Differenzschlupfwerts 53. Durch Anpassung wenigstens eines Steuersignals 31, 32 wird der Differenzschlupfwert 42 dem vorgegebenen Soll-Differenzschlupfwert 53 nachgeführt. Abhängig von der Bewertung 45 gibt die in der Bremssteuereinheit 21 durchgeführte Supervision 41 die ermittelten Steuersignale 31, 32 zur Umsetzung an den Einlassventilen 22 beziehungsweise an den Auslassventilen 23 frei oder passt an wenigstens einer Radbremse der bei der Supervision 41 berücksichtigten Achsen wenigstens ein Steuersignal 31, 32 zur Nachführung im Hinblick auf eine zukünftige Reduzierung des Differenzschlupfwerts 42 an. Die Supervision 41 betrachtet den jeweiligen Differenzschlupfwert 42 pro Achse beziehungsweise pro Bremskreis, also separat für Vorderachse 3, Hinterachse 4 und für weitere Bremskreise beziehungsweise Achsen des Fahrzeugs. Die Bewertung 45 des Differenzschlupfwerts 42 erfolgt anhand eines Vergleichs des Differenzschlupfwerts 42 mit dem vorgegebenen Soll-Differenzschlupfwert 53.

Bei der Bewertung 45 wird außerdem ein vorgegebenes Regeleingriffskriterium 46 berücksichtigt, wobei die Supervision 41 der Bremssteuereinheit 21 abhängig von der Erfüllung des Regeleingriffskriteriums 46 die Steuersignale 31, 32 freigibt oder wenigstens eines Steuersignals 31, 32 zur Nachführung des Differenzschlupfwerts 42 anpasst.

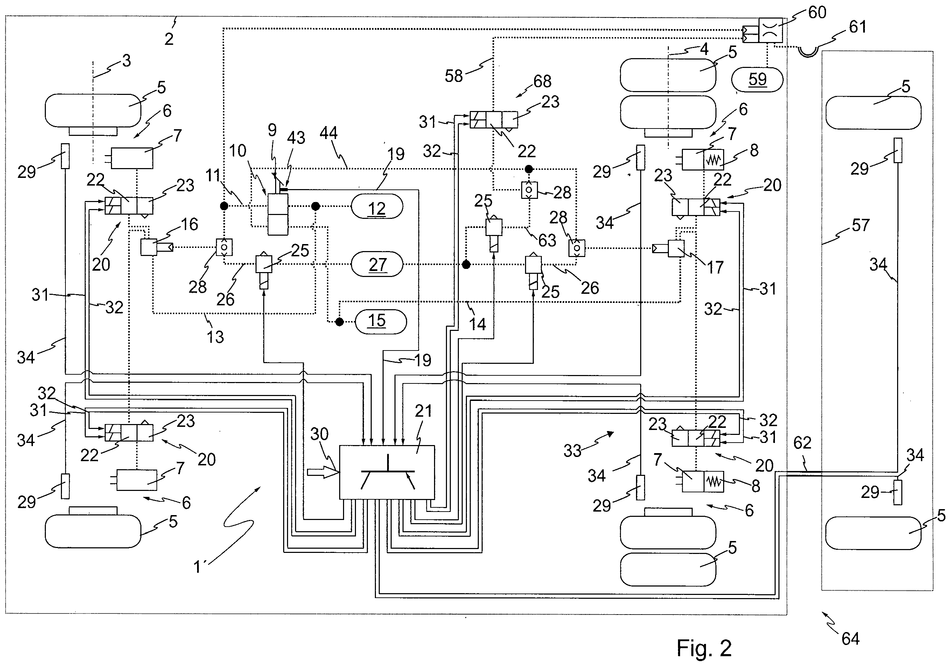

Im Ausführungsbeispiel gemäß Fig. 3 ist der Bewertung 45 des Differenzschlupfwerts 42 als Regeleingriffskriterium 46 ein Schlupfschwellwert 47 vorgegeben. Liegt der ermittelte Differenzschlupfwert 42 unterhalb des vorgegebenen Differenzschlupfwerts 47, so schaltet die Supervision 41 die ermittelten Steuersignale 31, 32 für die Umsetzung an den Einlassventilen 22, 23 durch. In der Darstellung der Fig. 2 ist dies durch die Ansteuerung der Freigabe der Steuersignale 31, 32 repräsentiert.

Ergibt die Bewertung 45 des Differenzschlupfwerts 42 im Vergleich mit dem Schlupfschwellwert 47 einen zu großen Differenzschlupfwert 42, welcher den Schlupfschwellwert 47 erreicht oder gar größer als der Schlupfschwellwert 47 ist, so unterbindet die Supervision 41 die Freigabe 40 der aktuellen Steuersignale 31, 32 und veranlasst eine neue Ermittlung 36 des Steuersignals oder mehrerer Steuersignale 31, 32. Der Ermittlung 36 von Steuersignalen 31, 32 wird dabei eine Anpassungsinformation 54 bereitgestellt, welche auf der Grundlage der Bewertung 45 die Tendenz anzeigt, in welcher Richtung (Erhöhung oder Senkung) der Bremsdruck an bestimmten Radbremsen angepasst werden soll, um den künftigen Differenzschlupfwert 42 wie gewünscht zu verändern und einem Soll-Differenzschlupfwert 53 nachzuführen. Bei jeder neuen Ermittlung von Steuersignalen 31, 32 erfolgt ein neuer Umlauf der Supervision 41, so dass stets aktuell ermittelte Steuersignale 31, 32 vor einer Freigabe 40 zur Umsetzung bewertet werden.

Bei der Anpassung der Steuersignale 31, 32 im Hinblick auf eine Reduzierung des Differenzschlupfwerts 42 wird zur Erhöhung des Bremsdrucks P das Steuersignal 31 eines Einlassventils 22 der betreffenden Radbremse und/oder zur Senkung des Bremsdrucks P das Steuersignal 32 eines Auslassventils 23 verändert. Die Ermittlung 36 neuer, aktueller Steuersignale 31, 32 erfolgt dabei derart, dass die Bremssteuereinheit 21 unter Berücksichtigung der Bewertung 45 des Differenzschlupfwerts 42 den Bremsdruck an derjenigen Achse des verglichenen Paars von Achsen 3, 4 mit dem größeren Schlupf verringert.

Dadurch wird im weiteren Verlauf einer Bremsung im Drucksteuermodus 24 aufgrund einer externen Bremsanforderung 30 die Achse mit dem aktuell relativ höchsten Schlupf 38 geschont, in dem sie keine zusätzliche Bremsarbeit zu verrichten hat oder entlastet wird. Die anderen Bremskreise, beziehungsweise die angeschlossenen Radbremsen übernehmen die Umsetzung der angeforderten Bremsleistung.

Ein zu hoher Differenzschlupfwert 42 lässt den Rückschluss auf eine Überbremsung der betrachteten Achse im Verhältnis zur Referenzachse zu. Ist das in der Supervision 41 betrachtete Steuersignal beziehungsweise das ermittelte Pulsmuster zur Ansteuerung des Einlassventils 22 vorgesehen, würde eine Freigabe 40 des Steuersignals 31 dazu führen, dass die betreffende Achse noch mehr in den Überbremsungszustand geraten würde, was durch die Sperrung und Neuberechnung des Steuersignals 31 aufgrund der Supervision 41 unterbunden ist. Ist in dem betrachteten Beispielsfall eines ermittelten Differenzschlupfs das ermittelte Pulsmuster ein Steuersignal 32 für das Auslassventil 23, so gibt die Supervision 41 das Pulsmuster für die Umsetzung an dem Auslassventil 23 frei.

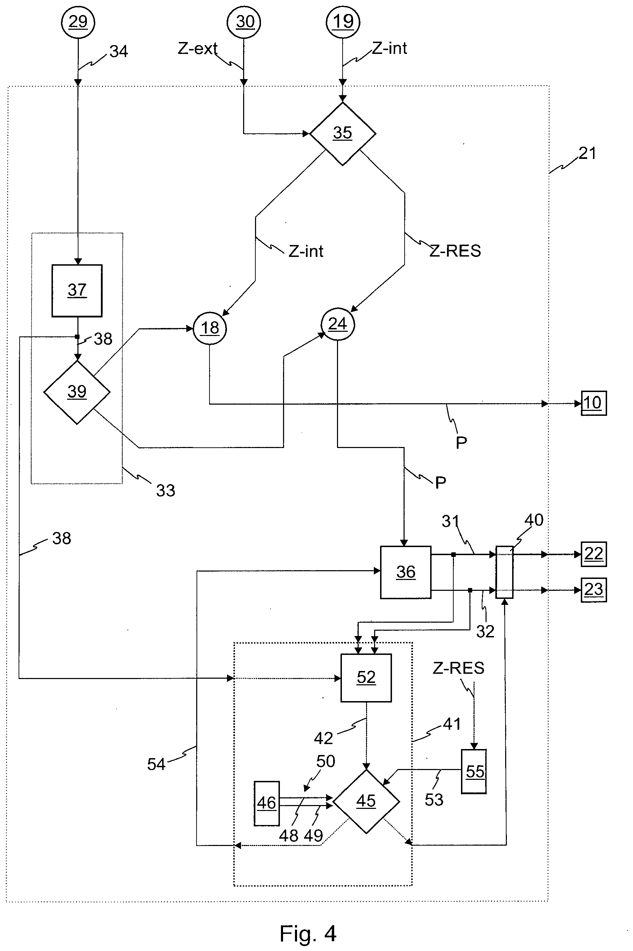

Im Ausführungsbeispiel gemäß Fig. 4 sind als Regeleingriffskriterium 46 für die Bewertung 45 des Differenzschlupfwerts 42 ein oberer Schlupfschwellwert 48 und ein unterer Schlupfschwellwert 49 als Toleranzband 50 vorgegeben. Eine Anpassung der Bremsdruckverteilung durch Veränderung der Steuersignale 31, 32 erfolgt, wenn der Differenzschlupfwert 42 den oberen Schlupfschwellwert 48 überschreitet oder den unteren Schlupfschwellwert 49 unterschreitet. Überschreitet der Differenzschlupfwert den oberen Schlupfschwellwert 48, so wird die Umsetzung des Pulsmusters (Steuersignal 31) durch das Einlassventil 22 gesperrt und neu berechnet. Für das Auslassventil 23 gilt analog, dass bei Unterschreiten des unteren Schlupfschwellwerts die Freigabe 40 für ein Pulsmuster (Steuersignal 32) für das Auslassventil 23 gesperrt und neu berechnet wird. Mit den beiden Parametern, nämlich oberen Schlupfschwellwert 48 und unterem Schlupfschwellwert 49 ist ein Toleranzband mit zulässigem Differenzschlupf dargestellt.

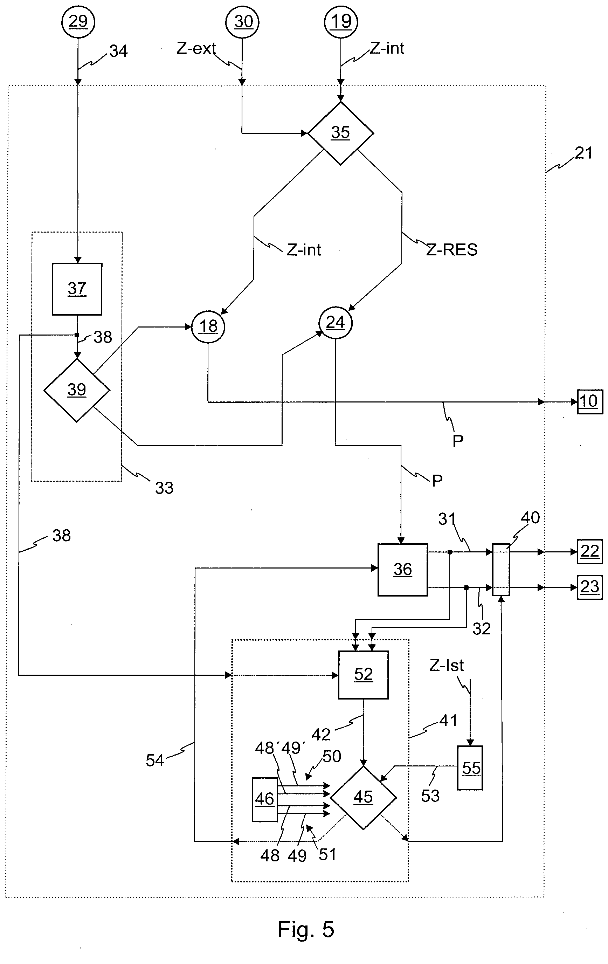

Unter Berücksichtigung des vorgegebenen Toleranzbandes 50 wird der Differenzschlupfwert 42 innerhalb des Toleranzbands 50 dem Soll-Differenzschlupfwert 53 gemäß der Vorgabe 55 nachgeführt. Der Soll-Differenzschlupfwert 53 wird vorteilhaft in Abhängigkeit von der Sollverzögerung Z-RES des Fahrzeugs oder der aktuellen Fahrzeugverzögerung Z-ist (vergleiche Fig. 5) vorgeben. Vorzugsweise gilt dabei im unteren Größenbereich der Fahrzeugverzögerung ein derartiger Soll-Differenzschlupfwert 53, dass die Hinterachse 4 oder eine der Hinterachsen gegenüber der als Referenzachse herangezogenen Vorderachse 3 einen größeren Schlupf 38 aufweist. Mit steigender Soll-Verzögerung (oder Ist-Verzögerung) wird der Soll-Differenzschlupf in Richtung eines ausgeglichenen Differenzschlupfs zwischen der Hinterachse 4 beziehungsweise den Hinterachsen und der Vorderachse 3 verändert. Das heißt, dass der Soll-Differenzschlupfwert 53 zunehmend reduziert ist, gegebenenfalls bis zum Erreichen des Wertes Null oder kleiner Null im oberen Größenbereich der Fahrzeugverzögerung.

Fig. 5 zeigt ein weiteres Ausführungsbeispiel eines Verfahrens zur Einstellung des Bremsdrucks P, wobei im Unterschied zu den Ausführungsbeispielen gemäß Fig. 3 und Fig. 4 ein erstes Toleranzband 50 mit Schlupfschwellwerten 48, 49 für einen Bremsbetrieb mit aktiven Dauerbremsen und ein zweites Toleranzband 51 mit Schlupfschwellwerten 48', 49' für einen Bremsbetrieb ohne Dauerbremsen vorgegeben ist. Je nachdem, ob eine Dauerbremse an einer Achse eines bezüglich des Differenzschlupfs betrachteten Achsenpaars aktiv ist, oder nicht, wird das jeweils dafür vorgesehene Toleranzband 50, 51 der Supervision 41 zugrunde gelegt. Durch die Bereitstellung mit unterschiedlich parametrierter Toleranzbänder 50, 51 kann gewählt werden, ob bei aktiver Dauerbremse ein höherer oberer Differenzschlupfwert 48 bei der Supervision 41 vorgegeben wird, beispielsweise zur Verringerung eines Ungleichlaufs des betrachteten Achsenpaares aufgrund Verschleißens der Bremsbeläge.

Auch die neu ermittelten Steuersignale 31, 32, beziehungsweise Pulsmuster, unterliegen der erfindungsgemäßen Supervision 41 durch Bewertung 45 eines Differenzschlupfwerts 42.

Während im Ausführungsbeispiel gemäß Fig. 1 ein Kraftfahrzeug dargestellt ist, zeigt. Fig. 2 einen elektrisch-pneumatischen Plan einer Bremsanlage 1' eines Fahrzeuggespanns 64, bei dem an das als Zugfahrzeug verwendete Fahrzeug 2 ein Anhängefahrzeug 57 und dessen Bremssystem an das Bremssystem des Zugfahrzeugs angeschlossen ist. Elektrische Leitungen sind mit Volllinien und pneumatische Leitungen mit punktierten Linien dargestellt. Mit Ausnahme der nachstehenden Besonderheiten entspricht der Aufbau der Bremsanlage 1' dem Aufbau der Bremsanlage 1 des Fahrzeugs 2 gemäß Fig. 1.

Zur Aktivierung des Bremssystems des Anhängefahrzeugs 57 ist ein dritter Bremskreis 63 mit einem vierten Druckvorrat 59 eingerichtet. Der dritte Bremskreis 63 weist ähnlich dem ersten Bremskreis 13 und dem zweiten Bremskreis 14 ein Anhänger-Drucksteuerventil 68, ein Doppelrückschlagventil 28 und ein 3/2-Wegeventil 25 auf. Das Anhänger-Drucksteuerventil 68 des dritten Bremskreises 63 beziehungsweise dessen Einlassventil 22 und Auslassventil 23 ist von der Steuereinheit 21 steuerbar. Im Unterschied zu dem ersten Bremskreis 13 und dem zweiten Bremskreis 14 ist eine Bremsdruckleitung 58 hinter dem Anhänger-Drucksteuerventil 68 mit einem Anhängerkontrollventil 60 verbunden, welches die Verbindung zwischen dem vierten Druckvorrat 59 und einem pneumatischen Kupplungskopf 61 beherrscht. An den Kupplungskopf 61 ist das Bremssystem des Anhängefahrzeugs 40 ankuppelbar. Das Bremssystem des Anhängefahrzeugs 57 ist im gezeigten Ausführungsbeispiel über die Vorsteuerung des Anhängerkontrollventils 60 aus einem vierten Druckvorrat 59 gespeist.

Über eine CAN-Schnittstelle 62 ist die Bremssteuereinheit 21 signalübertragend mit dem Bremssystem des Anhängefahrzeugs 57 verbunden und erfasst in dem Ausführungsbeispiel die Messsignale 34 der Drehzahlsensoren 29 an den Rädern 5 des Anhängefahrzeugs 57. Die Bremssteuereinheit 21 des Zugfahrzeugs erfasst dabei unmittelbar die Messsignale 34 der Drehzahlsensoren 29 von Rädern 5 des Anhängefahrzeugs 57.

In weiteren Ausführungsbeispielen weist das Anhängefahrzeug 57 eine eigene Steuereinheit zusätzlich zur Bremssteuereinheit des Zugfahrzeugs auf. Über die CAN-Schnittstelle 62 zwischen Anhängefahrzeug 57 und Fahrzeug 2, das in diesem Fall ein Zugfahrzeug ist, überträgt die in Fig. 5 nicht gezeigte Steuereinheit des Anhängefahrzeugs 57 zum Zugfahrzeug hin ein Geschwindigkeitssignal, beispielsweise die Anhängefahrzeug-Referenzgeschwindigkeit, welche von einer Steuereinheit des Anhängefahrzeugs 57 auf Grundlage aller vorhandenen Messsignale 34 von Drehzahlsensoren 29 des Anhängerfahrzeugs 57 ermittelt wurde. Alternativ wird eine Anhängefahrzeug-Achsgeschwindigkeit ermittelt und zur Bremssteuereinheit 21 übertragen, welche die Geschwindigkeit der Räder einer bestimmten, ausgewählten Achse des Anhängefahrzeugs 57 ist. Anders ausgedrückt wird diese Achsgeschwindigkeit auf der Grundlage der Messsignale 34 der Drehzahlsensoren 29 der betreffenden Achse des Anhängefahrzeugs 57 ermittelt. Die betreffende Achse des Anhängefahrzeugs 57 ist dabei eine solche Achse des Anhängefahrzeugs 57, die repräsentativ für die Verzögerungswirkung des Anhängefahrzeugs 57 ist. Bei einem Drehschemelanhängefahrzeug ist dies vorteilhaft die Vorderachse oder bei einem dreiachsigen Sattelauflieger die mittlere der drei Achsen.

Die Bremssteuereinheit 21 des Zugfahrzeugs ermittelt Bremsdrücke für das Anhängefahrzeug 57 und steuert die Drucksteuerventile der Radbremsen des Anhängefahrzeugs 57 über Steuersignale entsprechend den Radbremsen des Zugfahrzeugs, vergleiche Fig. 3 bis Fig.5. Dabei führt die Bremssteuereinheit 21 die bereits beschriebene Supervision 41 der Steuersignale aus und führt einen Differenzschlupfwert einem Soll-Differenzschlupfwert nach. Der Differenzschlupfwert entspricht dabei der Differenz zwischen dem Schlupf einer Achse des Anhängefahrzeugs 57 oder dessen Räder 5 und dem Schlupf an der Referenzachse des Systems, nämlich im Ausführungsbeispiel der Vorderachse 3 des Zugfahrzeugs.

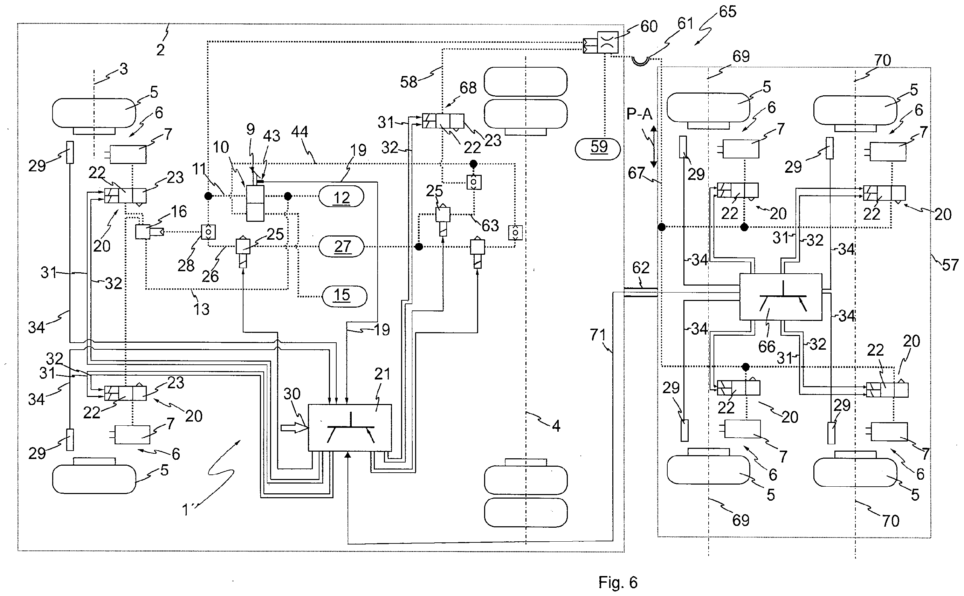

Fig. 6 zeigt einen elektrisch-pneumatischen Plan eines Ausführungsbeispiels einer erfindungsgemäßen Bremsanlage 1" für ein Fahrzeuggespann 65 mit einem als Zugfahrzeug vorausfahrenden Fahrzeug 2 und einem oder mehreren Anhängefahrzeugen 57. Elektrische Leitungen sind mit Volllinien und pneumatische Leitungen mit punktierten Linien dargestellt. Soweit dies nicht nachstehend anders beschrieben ist, entspricht die Bremsanlage 1" der Bremsanlage gemäß Fig. 2.

Das Anhängefahrzeug 57 weist ein Bremssystem mit einem Bremsmodul 66 und Radbremsen 6 mit jeweils einem Drucksteuerventil 20 auf, welche von dem Bremsmodul 66 unabhängig von der Bremssteuereinheit 21 des Zugfahrzeugs steuerbar sind. Das Bremsmodul 66 erfasst hierzu die Drehzahlen der Räder 5 über jeweilige Drehzahlsensoren 29 und führt autark eine Antiblockierfunktion aus.

Die Drucksteuerventile 20 des Anhängefahrzeugs 57 sind an eine gemeinsame Bremsdruckleitung 67 angeschlossen, in welcher ein bestimmter Anhänger-Bremsdruck P-A herrscht. Der Anhängerbremsdruck P-A ist über das Anhänger-Drucksteuerventil 68, angeordnet im Zugfahrzeug 2 vor dem Anhängerkontrollventil 60, einstellbar, wobei das Anhänger-Drucksteuerventil 68 von der Bremssteuereinheit 21 steuerbar ist. Somit beherrscht die Bremssteuereinheit 21 über das Anhänger-Drucksteuerventil 68 und das Anhängerkontrollventil 60 den Anhängerbremsdruck P-A in der Verbindung zwischen dem Anhängerkontrollventil 60 und dem vierten Druckvorrat 59, welcher für das Anhängefahrzeug 57 vorgesehen ist.

Das Bremsmodul 66 ermittelt aus den Drehzahlen der Räder 5 des Anhängefahrzeugs 57 diejenige Anhängerachse 69, 70 mit dem aktuell geringsten Schlupf 38, beispielsweise die vordere Achse des Anhängefahrzeugs 57. Eine den Schlupf 38 an der so ausgewählten Stellachse 69 repräsentierende Information 71 teilt das Bremsmodul 66 der Bremssteuereinheit 21 über die CAN-Schnittstelle 62 mit.

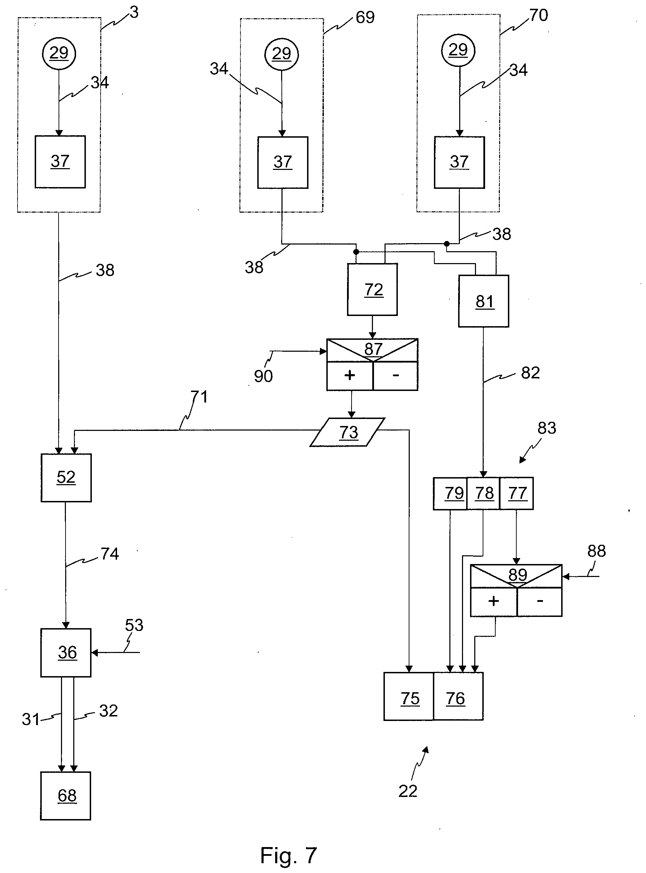

Die Einstellung der Bremsdrücke P-A an den Radbremsen 6 im Anhängefahrzeug 57 ist nachstehend anhand von Fig. 7 näher erläutert. Dabei erfolgt wie bereits oben beschrieben für die Referenzachse, regelmäßig die Vorderachse 3 des Zugfahrzeugs, eine Schlupfbestimmung 37 anhand der Messsignale 34 der an der Vorderachse 3 angeordneten Drehzahlsensoren 29. Für das Anhängefahrzeug 57 werden entsprechende Schlupfbestimmungen 37 für die Anhängerachsen 69, 70 durchgeführt.

Anhand der so für die Anhängerachsen 69, 70 bestimmten Schlüpfe 38 wird in einem Vergleich 72 der Schlüpfe 38 diejenige Anhängerachse 69 mit dem geringsten Schlupf 38 als Stellachse 69 ermittelt. Dies sei im Ausführungsbeispiel gemäß Fig. 7 die vordere Anhängerachse. Der Schlupf 38 der Stellachse 69 ist die Information 71, welche der Bremssteuereinheit 21 des Zugfahrzeugs mitgeteilt wird.

Mit der Information 71 über den Schlupf 38 an der Stellachse 69 führt die Bremssteuereinheit 21 die Differenzbestimmung 52 durch, d.h. sie ermittelt einen Anhänger-Differenzschlupfwert 74 als Differenz zwischen dem Schlupf 38 an der Stellachse 69 und dem Schlupf 38 an der als Referenzachse angenommenen Vorderachse 3 des Zugfahrzeugs. Der Anhänger-Differenzschlupfwert 74 wird analog der oben zu Fig. 3 beschriebenen Nachführung der Differenzschlupfwerte 42 einem vorgegebenen Soll-Differenzschlupfwert 53 nachgeführt. Im Rahmen dieser Regelung variiert die Bremssteuereinheit 21 bei der Ermittlung 36 von Steuersignalen den Anhänger-Bremsdruck P-A und steuert das Anhänger-Drucksteuerventil 68, angeordnet im Zugfahrzeug 2 vor dem Anhängerkontrollventil 60, mit entsprechenden Steuersignalen 31, 32 an. Der so bestimmte Anhänger-Bremsdruck P-A steht schließlich am Anhängerkontrollventil 60 zur Verfügung.

Nach Eintritt einer vorgegebenen Startbedingung 87 veranlasst das Bremsmodul 66 des Anhängefahrzeugs 57 außerdem eine Signalausgabe 73 zur Umschaltung der Einlassventile 22 der Drucksteuerventile 20 an den anderen Anhängerachsen, im Ausführungsbeispiel der hinteren Anhängerachse 70, in den geschlossenen Schaltzustand 75. Startbedingung 87 für das Bremsmodul 66 des Anhängefahrzeugs ist im gezeigten Ausführungsbeispiel der Empfang eines Informationssignals 90 der Bremssteuereinheit 21 des Zugfahrzeugs, mit dem die Bremssteuereinheit 21 dem Bremsmodul 66 des Anhängefahrzeugs 57 den Beginn der Regelung der Differenzschlupfwerte anzeigt. Die Bremssteuereinheit 21 signalisiert somit ein aktives Eingreifen der Supervision (Bezugszeichen 41 in Fig. 3 bis Fig. 5) in die Ermittlung 36 von Steuersignalen. In weiteren vorteilhaften Ausführungsbeispielen wird alternativ oder zusätzlich als Startbedingung 87 der Eintritt einer bestimmten Verzögerungswirkung auf das Fahrzeuggespann 65 erfasst, beispielsweise etwa 1 m/s². Bei Erfüllung der vorgegebenen Startbedingung 87 schließt das Bremsmodul 66 des Anhängefahrzeugs 57 die Einlassventile 22 der momentan stärker im Schlupf laufenden Anhängerachse 70 und überwacht deren Schaltzustand.

Im Rahmen des Vergleichs 72 der Schlüpfe 38 der Anhängerachsen 69, 70 erfolgt eine Differenzbestimmung 81 dieser Schlüpfe 38, d.h. es wird ein zwischenachsiger Anhänger-Differenzschlupf 82 ermittelt. Der zeitliche Verlauf des Anhänger-Differenzschlupfs 82 wird überwacht im Hinblick auf einen Wechsel 76 des Schaltzustands 75 der Einlassventile 22 an der hinteren Anhängerachse 70, das heißt die Beendigung der aktiven Ansteuerung der Drucksteuerventile 20 bzw. deren Einlassventile 22 . Der geschlossene Schaltzustand 75 der Einlassventile 22, das heißt die aktive Ansteuerung der Drucksteuerventile 20 bzw. deren Einlassventile 22, wird dabei beendet und wieder eingeschaltet in Abhängigkeit einer Bewertung 83 des zeitlichen Verlaufs des zwischenachsigen Anhänger-Differenzschlupfs 82 mit wenigstens einer Schaltschwelle 77, 78, 79 des Anhänger-Differenzschlupfs 82.

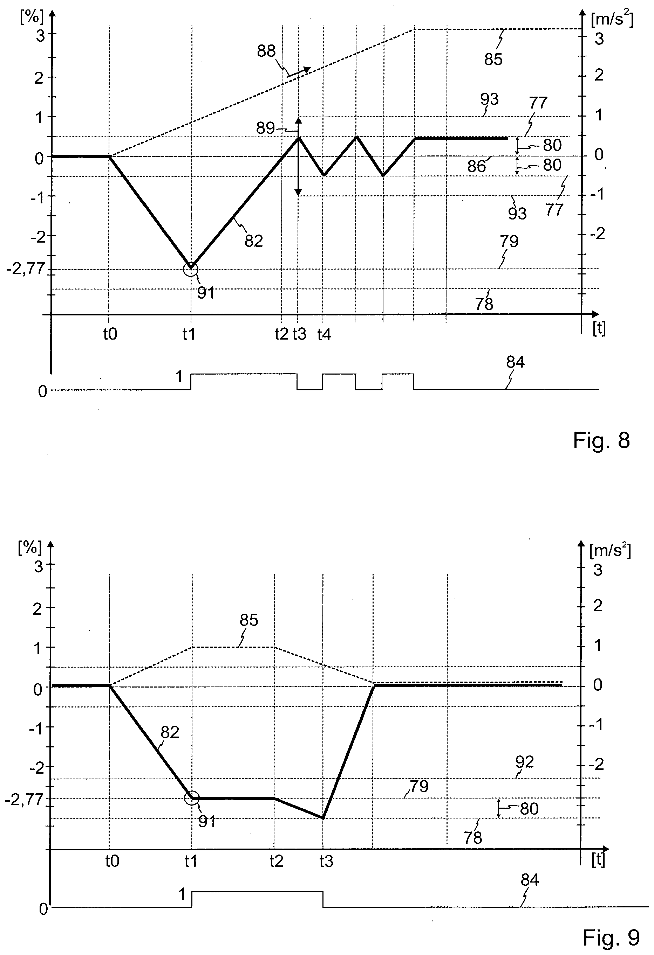

Im gezeigten Ausführungsbeispiel sind drei Schaltschwellen 77, 78, 79 für unterschiedliche Situationen vorgegeben, welche unter Bezugnahme auf Fig. 8 bis Fig. 10 nachstehend beschrieben sind. Fig. 8, Fig. 9 und Fig. 10 zeigen jeweils einen grafischen Verlauf des Anhänger-Differenzschlupfs 82 in seiner definitionsgemäßen Hilfsdimension [%]. Der Graph 84 entspricht den Schaltzuständen (Bezugszeichen 75 in Fig. 7) der Einlassventile 22 an der hinteren Anhängerachse 70. Der Schaltzustand "0" entspricht dabei dem geöffneten Schaltzustand, während der geschlossene Schaltzustand mit "1" bezeichnet ist. Der Graph 85 stellt qualitativ den zeitlichen Verlauf der angeforderten Fahrzeugverzögerung im Sinn negativer Beschleunigungsvorgaben in der Dimension [m/s²] dar, das heißt Sollwerte entsprechend der externen Bremsanforderung 30 oder der resultierenden Bremsanforderung 56.

Der Zeitpunkt t0 entspricht dem Beginn einer Bremsverzögerung nach externer Bremsanforderung. Zum Startzeitpunkt t1 ist die vom Bremsmodul 66 erfassbare Startbedingung 87 erfüllt, das heißt im gezeigten Ausführungsbeispiel empfängt das Bremsmodul 66 zum Startzeitpunkt t1 ein Informationssignal 90 der Bremssteuereinheit 21 zur Anzeige der Supervision 41 mit Anpassung der Steuersignale zur Nachführung des Differenzschlupfwerts (Bezugszeichen 42 in Fig. 3 bis Fig. 5). durch Zuleitung eines entsprechenden Informationssignals 90 an.

Nachdem das Bremsmodul 66 des Anhängefahrzeugs 57 die Einlassventile 22 der momentan stärker im Schlupf laufenden Anhängerachse 70 nach Erfüllung der Startbedingung 87 zum Startzeitpunkt t1 erstmalig schließt, werden bei der Überwachung von deren Schaltzuständen die vorgegebenen Schaltschwellen 77, 78, 79 berücksichtigt. Die Schaltschwellen 77, 78, 79 sind nachstehend näher erläuterte Schwellwerte, mit denen der aktuelle Anhänger-Differenzschlupf verglichen wird. Bei der Bestimmung der Schwellwerte werden in der Dimension (Hilfsmaßeinheit) des Differenzschlupfs (Prozent) vorgegebene Toleranzschlupfwerte 80 berücksichtigt, beispielsweise addiert.

Der Toleranzschlupfwert 80 beträgt beispielsweise 0,5 %. Der Toleranzschlupfwert bezieht sich dabei auf die Definition des Schlupfs in der Dimension (Hilfsmaßeinheit) Prozent gemäß der Formel (n1 - n2) / n1 x 100 %, wobei die Variable "n" die Drehzahl einerAchse bezeichnet.

Für die Überwachung und gegebenenfalls Wechsel 76 der Schaltzustände der Einlassventile 22 der Anhängerachse 70 werden der Anhänger-Differenzschlupf 82 und die Schaltschwellen 77, 78, 79 als Kriterien ermittelt, d.h. insbesondere auch die zur qualitativen Bestimmung der Schaltschwellen 77, 78, 79 herangezogenen Toleranzschlupfwerte 80.

Fig. 8 illustriert die Überwachung eines beispielhaften Verlaufs des Anhänger-Differenzschlupfs 82 im Hinblick auf eine erste Schaltschwelle 77. Dabei wird ein Erreichen und Überschreiten einer Nulllinie 86 des Anhänger-Differenzschlupfs 82 um einen Toleranzschlupfwert 80 als Schaltschwelle 77 überwacht.

Zum Zeitpunkt t2 weisen alle Fahrzeugachsen 69, 70 des Anhängefahrzeugs 57 gleiche Drehzahlen bzw. Geschwindigkeiten und damit Schlüpfe auf, so dass der Anhänger-Differenzschlupf 82 die Nulllinie 86 erreicht hat.

Im Zeitpunkt t3 erreicht der Anhänger-Differenzschlupf 82 die vorgegebene erste Schaltschwelle 77, das heißt er überschreitet die Nulllinie 86 um den vorgegebenen Toleranzschlupfwert 80 von 0,5 %, so dass ein Schaltzustandswechsel für die betreffenden Einlassventile 22 erfolgt. Das Bremsmodul 66 des Anhängefahrzeugs 57 öffnet die bis dahin geschlossenen Einlassventile 22 der hinteren Anhängerachse 70 wieder beziehungsweise beendet deren vorübergehende Schließung, so dass in den Bremszylindern 7 der hinteren Anhängerachse 70 der Bremsdruck beginnt anzusteigen. Der durch ein geregeltes Öffnen der Einlassventile 22 der hinteren Anhängerachse 70 einsetzende Anstieg des Bremsdrucks in den Bremszylindern 7 der hinteren Anhängerachse 70 verschiebt das Verhältnis der Drehzahlen, Geschwindigkeiten und Schlüpfe zwischen der Stellachse 69 und der hinteren Anhängerachse 70 zunehmend und bei einem stetigen Anstieg der Bremsanforderung Graph 85 stetig in Richtung eines Überbremsens der hinteren Anhängerachse 70 in Relation zur Stellachse 69 des Anhängefahrzeugs 57, so dass in der Folge bei weiter zunehmender Bremsanforderung Graph 85 der Anhänger-Differenzschlupf 82 die Nulllinie 86 wieder erreicht und unterschreitet.

Im Zeitpunkt t4 erreicht der Anhänger-Differenzschlupf 82 infolge des weiteren Anstiegs der externen Bremsanforderung gemäß Graph 85 und der geregelten Öffnungen der Einlassventile 22 der Anhängerachse 70 zwar mit anderem Vorzeichen als im Zeitpunkt t3, aber im Betrag wieder die erste Schaltschwelle 77 (Toleranzschlupfwert 80), so dass wieder ein Wechsel der Schaltzustände erfolgt und die Einlassventile 22 der Anhängerachse 70 wieder geschlossen werden.

Für die Überwachung und gegebenenfalls Wechsel 76 der Schaltzustände der Einlassventile 22 der Anhängerachse 70 wird im gezeigten Ausführungsbeispiel zusätzlich die Bremsanforderung gemäß Graph 85 ausgewertet. Eine Tendenz 88 der aktuellen Bremsanforderung, das heißt der externen Bremsanforderung 30 oder der resultierenden Bremsanforderung 56 aus externer Bremsanforderung 30 und Fahrerbremsanforderung 19, wird bei einer Entscheidung über die Vorgabe eines erweiterten Toleranzbereiches 89 nach Erreichen der ersten Schaltschwelle 77 berücksichtigt. Der erweiterte Toleranzbereich 89 wird beispielsweise doppelt so groß wie der Toleranzschlupfwert 80 gemäß der Schaltschwelle 77 vorgegeben, also hier beispielsweise 1 m/s² beiderseits der Nulllinie 86. Sollte eine Tendenz 88 zunehmender Bremsanforderung ermittelt werden, wie in dem beispielhaften Verlauf gemäß Graph 85, so erfolgt aufgrund des Erreichens der ersten Schaltschwelle 77 ein Wechsel des Schaltzustandes der Einlassventile, das heißt zum Zeitpunkt t3 werden die bis dahin geschlossenen Einlassventile nicht mehr schließend angesteuert. Zum Zeitpunkt t4 erfolgt wegen des abermaligen Erreichens der ersten Schaltschwelle 77 wieder ein Wechsel des Schaltzustandes und die Einlassventile werden geschlossen.

Im Fall entsprechend der Tendenz 88 abnehmender Bremsanforderung 30, 56 wird der erweiterte Toleranzbereich 89 für den Anhänger-Differenzschlupf 82 vorgegeben und die Einlassventile 22 der Anhängerachsen 70, abgesehen von der Regelachse 69, werden bis zum Verlassen des erweiterten Toleranzbereichs 89, das heißt bis zum Erreichen oder Überschreiten der durch den Toleranzbereich 89 bestimmten erweiterten Schaltschwellen 93, geschlossen gehalten.

Fig. 9 illustriert die Überwachung eines beispielhaften Verlaufs des Anhänger-Differenzschlupfs 82 im Hinblick auf eine zweite Schaltschwelle 78. Für die Bestimmung der zweiten Schaltschwelle 78 wird auf einen Anfangswert 91 des Anhänger-Differenzschlupf 82 zugegriffen, welcher zum Startzeitpunkt t1 des Schließens der Einlassventile 22 abgespeichert wird, beispielsweise wie in Fig. 9 angegeben, ein Anfangswert von -2,77 %. Der Anfangswert 91 wird zuzüglich einem Toleranzschlupfwert 80 als zweite Schaltschwelle 78 vorgegeben und für die Überwachung der Schaltzustände der Einlassventile 22 und Entscheidungen über Wechsel (Bezugszeichen 76 in Fig. 7) von deren Schaltzuständen herangezogen. Die zweite Schaltschwelle 78 verhindert zuverlässig ein weiteres Ansteigen der Unterbremsung der Stellachse 69 in Relation zur Bremswirkung der Anhängerachse 70über den Wert des Toleranzschlupfwerts 80 hinaus. Die zweite Schaltschwelle 78 ist eingerichtet für den Fall, dass der Betrag des Anhänger-Differenzschlupfs 82 zwischen den Anhängerachsen 69, 70 nach dem Schließen der Einlassventile zum Zeitpunkt t1 zunimmt, ohne dass vorher wenigstens zeitweise eine Annäherung des Anhänger-Differenzschlupfs 82 an die Nulllinie 86, vom Anfangswert 91 ausgehend um mindestens den Wert des Toleranzschlupfwert 80, erfolgte. Zum Zeitpunkt t3 erreicht der Anhänger-Differenzschlupf 82 die vorgegebene zweite Schaltschwelle 78 entsprechend dem hierfür berücksichtigten Toleranzschlupfwert 80. Beim Erreichen der zweiten Schaltschwelle 78 öffnet das Bremsmodul 66 des Anhängefahrzeugs 57 wieder die bis dahin geschlossenen Einlassventile 22 der hinteren Anhängerachse 70 bzw. beendet die aktive Ansteuerung im Sinn eines Schließens der Einlassventile. In weiteren Ausführungsbeispielen wird die zweite Schaltschwelle 78 als Summe des gespeicherten Anfangswerts 91 und einem Anteil an dem Anfangswert 91 des Anhänger-Differenzschlupfs 82 zum Zeitpunkt t1 des Schließens der Einlassventile 22 gesetzt.

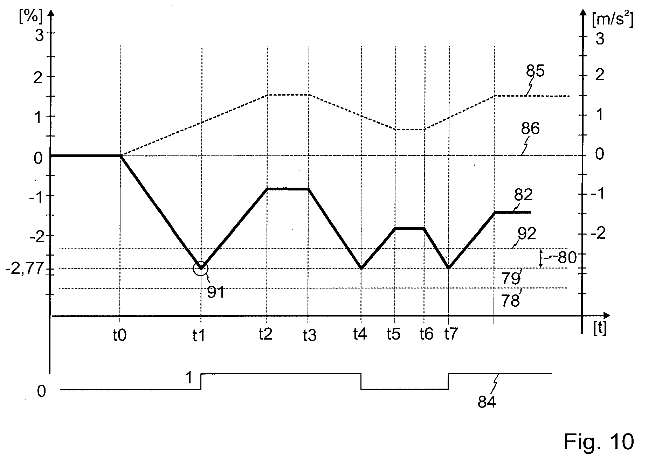

Fig. 10 illustriert die Überwachung eines beispielhaften Verlaufs des Anhänger-Differenzschlupfs 82 im Hinblick auf eine dritte Schaltschwelle 79, wobei der gespeicherte Anfangswert 91 des Anhänger-Differenzschlupfs 82 zum Startzeitpunkt t1 vorgegeben wird. Die dritte Schaltschwelle 79 wird für den Fall eines im Betrag abnehmenden Anhänger-Differenzschlupfs 82 vorgegeben, wobei jedoch im Unterschied zum Anwendungsbereich der zweiten Schaltschwelle 78 der Betrag des Anhänger-Differenzschlupfs 82 seit dem Startzeitpunkt zeitweise um mindestens einen Toleranzschlupfwert 80 geringer wurde. Anders ausgedrückt wird die dritte Schaltschwelle 79 anstelle der zweiten Schaltschwelle 78, also der Anfangswert 91 ohne den bei der zweiten Schaltschwelle 78 vorgesehenen Zuschlag, angewendet, sofern der Betrag des Anhänger-Differenzschlupf 82 trotz aktuell zunehmender Tendenz zuvor bereits in einem bestimmten Maß gesunken war, nämlich um den Betrag des Toleranzschlupfwerts 80 von etwa 0,5 %. Der Zuschlag auf den Anfangswert 91 zur Bestimmung der Schaltschwelle entfällt also, sobald der sinkende Betrag des Anhänger-Differenzschlupfwerts 82 die durch den Toleranzschlupfwert 80 bestimmten Grenze 92 unterschreitet. Auf diese Weise wird die Ansteuerbarkeit der sich im geschlossenen Schaltzustand befindlichen Einlassventile sichergestellt für Fälle, in denen eine Annäherung an die Nulllinie 86 um mindestens den Toleranzschlupfwert 80 erfolgt, ein ausgeglichener Anhänger-Differenzschlupf 82 durch ein Erreichen bzw. Überschreiten der Nulllinie 86 aber nicht.

Die dritte Schaltschwelle 79 erfasst Bremssituationen, in denen die Nulllinie 86, d. h. der Zustand eines zwischenachsigen ausgeglichenen Schlupfverhaltens, nicht erreicht wird und daher die erste Schaltschwelle 77 nicht erreichbar ist. Steigt der Betrag des Anhänger-Differenzschlupfs 82 wieder, im Ausführungsbeispiel sowohl ab dem Zeitpunkt t3 als auch ab dem Zeitpunkt t6, so wird bei Erreichen des als Schaltschwelle 79 für den Vergleich mit dem aktuellen Anhänger-Differenzschlupf 82 herangezogenen Anfangswerts 91 der Schaltzustand der betreffenden Einlassventile mit Ausnahme der Ventile der Regelachse gewechselt.

### Bezugszeichenliste (Bestandteil der Beschreibung)

1. Bremsanlage
2. Fahrzeug
3. Vorderachse
4. Hinterachse
5. Rad
6. Radbremse
7. Bremszylinder
8. Federspeicher
9. Bremspedal
10. Betriebsbremsventil
11. Bremsleitung
12. Druckmittelvorrat
13. erster Bremskreis
14. zweiter Bremskreis
15. zweiter Druckmittelvorrat
16. Relaisventil
17. Relaisventil
18. Normalbremsmodus
19. Fahrerbremsanforderung
20. Drucksteuerventil
21. Bremssteuereinheit
22. Einlassventil
23. Auslassventil
24. Drucksteuermodus
25. 3/2-Wege-Ventil
26. Druckleitung
27. dritter Druckmittelvorrat
28. Doppelrückschlagventil
29. Drehzahlsensor
30. externe Bremsanforderung
31. Steuersignal Einlassventil
32. Steuersignal Auslassventil
33. Antiblockiersystem
34. Messsignal
35. Moduserfassung
36. Ermittlung
37. Schlupfbestimmung
38. Schlupf
39. Aktivierung
40. Freigabe
41. Supervision
42. Differenzschlupfwert
43. Bremssignalgeber
44. Bremsleitung
45. Bewertung
46. Regeleingriffskriterium
47. Schlupfschwellwert
48. Oberer Schlupfschwellwert
49. Unterer Schlupfschwellwert
50. Toleranzband
51. Toleranzband
52. Differenzbestimmung
53. Soll-Differenzschlupfwert
54. Anpassungsinformation
55. Vorgabe
56. resultierende Bremsanforderung
57. Anhängefahrzeug
58. Bremsdruckleitung Anhänger
59. vierter Druckvorrat
60. Anhängerkontrollventil
61. Kupplungskopf
62. CAN-Schnittstelle
63. dritter Bremskreis
64. Fahrzeuggespann
65. Fahrzeuggespann
66. Bremsmodul
67. Bremsdruckleitung
68. Anhänger-Drucksteuerventil
69. Stellachse
70. Anhängerachse
71. Information
72. Vergleich
73. Signalausgabe
74. Anhänger-Differenzschlupfwert
75. Schaltzustand
76. Wechsel
77. erste Schaltschwelle
78. zweite Schaltschwelle
79. dritte Schaltschwelle
80. Toleranzschlupfwert
81. Differenzbestimmung
82. Anhänger-Differenzschlupf
83. Bewertung
84. Graph
85. Graph
86. Nulllinie
87. Startbedingung
88. Tendenz
89. Toleranzbereich
90. Informationssignal
91. Anfangswert
92. Grenze
93. Erweitere Schaltschwelle
P Bremsdruck
P-A Anhänger-Bremsdruck
Z-int interner Verzögerungswert
Z-ext externer Verzögerungswert
Z-RES resultierender Verzögerungswert
Z-ist Ist-Verzögerung
t1 Startzeitpunkt
t0-t7 Zeitpunkt

## Patentansprüche

1. Verfahren zum Einstellen von Bremsdrücken (P) an pneumatisch betätigten Radbremsen (6) eines Fahrzeugs (2), wobei ein Bremsdruck (P) an den Radbremsen (6) in einem Normalbremsmodus (18) in Abhängigkeit einer vom Fahrer des Fahrzeugs (2) bestimmten Fahrerbremsanforderung (19) eingestellt wird, und wobei eine Bremssteuereinheit (21) bei Empfang einer von der Fahrerbremsanforderung (19) unabhängigen externen Bremsanforderung (30) und/oder bei Vorliegen einer Blockierneigung bestimmter Räder (5) die Einstellung des Bremsdrucks (P) in einem Drucksteuermodus (24) übernimmt, wobei die Bremssteuereinheit (21) im Drucksteuermodus (24) Steuersignale (31, 32) für Drucksteuerventile (20) der jeweiligen Radbremsen (6) ermittelt und durch Ansteuerung der Drucksteuerventile (20) den Bremsdruck (P) der betreffenden Radbremse (6) verändert,
**dadurch gekennzeichnet, dass**
die Bremssteuereinheit (21) im Drucksteuermodus (24) nach externer Bremsanforderung (30) vor einer Freigabe (40) der Steuersignale (31, 32) für die betreffenden Drucksteuerventile (20) laufend aus Messsignalen (34) von Drehzahlsensoren (29) der Räder (5) wenigstens einen Differenzschlupfwert (42) als Differenz zwischen dem jeweiligen Schlupf (38) zweier Achsen (3, 4) des Fahrzeugs (2) ermittelt und unter Berücksichtigung eines vorgegebenen oder einstellbaren Soll-Differenzschlupfwerts (53) bewertet sowie in Abhängigkeit der Bewertung (45) den Differenzschlupfwert (42) durch Anpassung wenigstens eines Steuersignals (31, 32) dem Soll-Differenzschlupfwert (53) nachführt.

2. Verfahren nach Anspruch 1,
**dadurch gekennzeichnet, dass**
bei der Nachführung des Differenzschlupfwerts (42) zur Erhöhung des Bremsdrucks (P) einer Radbremse (6) das Steuersignal (31) eines Einlassventils (22) des jeweiligen Drucksteuerventils (20) und/oder zur Senkung des Bremsdrucks (P) das Steuersignal (32) eines Auslassventils (23) des jeweiligen Drucksteuerventils (20) und/oder das Steuersignal (31, 32) eines auf eine Radbremse (6) der jeweils anderen Achse (3, 4) wirkenden Einlassventils (22) oder Auslassventils (23) verändert wird.

3. Verfahren nach Anspruch 1 oder 2,
**dadurch gekennzeichnet, dass**
die Bremssteuereinheit (21) unter Berücksichtigung der Bewertung (45) des Differenzschlupfwerts (42) den Bremsdruck (P) an derjenigen Achse (3, 4) des verglichenen Paares von Achsen (3, 4) mit dem größeren Schlupf (38) verringert.

4. Verfahren nach einem der vorhergehenden Ansprüche,
**dadurch gekennzeichnet, dass**
die Bremssteuereinheit (21) den wenigstens einen ermittelten Differenzschlupfwert (42) unter Berücksichtigung wenigstens eines Regeleingriffskriteriums (46) bewertet und abhängig von der Erfüllung des Regeleingriffskriteriums (46) die Steuersignale (31, 32) freigibt oder wenigstens eines Steuersignals (31, 32) zur Nachführung des Differenzschlupfwerts (42) anpasst.

5. Verfahren nach Anspruch 4,
**dadurch gekennzeichnet, dass**
der Bremssteuereinheit (21) als Regeleingriffskriterium (46) für die Bewertung (45) des Differenzschlupfwerts (42) wenigstens ein Schlupfschwellwert (47, 48, 49) vorgegeben ist und bei Überschreiten des Schlupfschwellwerts (47, 48, 49) eine Anpassung der Verteilung des Bremsdrucks (P) auf die Achsen (3, 4) erfolgt.

6. Verfahren nach Anspruch 4 oder 5,
**dadurch gekennzeichnet, dass**
der Bremssteuereinheit (21) als Regeleingriffskriterium (46) für die Bewertung (45) des Differenzschlupfwerts (42) ein Toleranzband (50, 51) mit einem oberen Schlupfschwellwert (48) und einem unteren Schlupfschwellwert (49) vorgegeben ist und bei Überschreiten des oberen Schlupfschwellwerts (48) oder Unterschreiten des unteren Schlupfschwellwerts (49) eine Anpassung der Verteilung des Bremsdrucks (P) auf die Achsen (3, 4) erfolgt.

7. Verfahren nach Anspruch 6,
**dadurch gekennzeichnet, dass**
ein erstes Toleranzband (50) mit Schlupfschwellwerten (48, 49) für einen Bremsbetrieb mit aktiven Dauerbremsen und ein zweites Toleranzband (51) mit Schlupfschwellwerten (48', 49') für einen Bremsbetrieb ohne Dauerbremsen vorgegeben ist.

8. Verfahren nach einem der vorhergehenden Ansprüche,
**dadurch gekennzeichnet, dass**
Differenzschlupfwerte (42) für mehrere Achsen (3, 4) jeweils bezogen auf eine in allen Achsenpaaren berücksichtigte Referenzachse (3) ermittelt werden.

9. Verfahren nach einem der vorhergehenden Ansprüche,
**dadurch gekennzeichnet, dass**
der Differenzschlupfwert (42) mit dem vorgegebenen oder einstellbaren Soll-Differenzschlupfwert (53) als Führungsgröße geregelt wird.

10. Verfahren nach einem der vorhergehenden Ansprüche,
**gekennzeichnet durch**
eine Vorgabe (55) des Soll-Differenzschlupfwerts (53) in Abhängigkeit einer aus externer Bremsanforderung (30) und Fahrerbremsanforderung (19) resultierenden Bremsanforderung (56).

11. Verfahren nach einem der Ansprüche 1 bis 10,
**gekennzeichnet durch**
eine Vorgabe (55) des Soll-Differenzschlupfwerts (53) in Abhängigkeit einer Ist-Verzögerung (Z-ist) des Fahrzeugs (2).

12. Verfahren nach einem der Ansprüche 8 bis 11,
**dadurch gekennzeichnet, dass**
zur Bestimmung der Bremsdrücke (P, P-A) in einem Fahrzeuggespann (65) aus einem Kraftfahrzeug (2) und wenigstens einem Anhängefahrzeug (57)
- laufend aus Messsignalen (34) der Drehzahlsensoren (29) der Räder (5) des Anhängefahrzeugs (57)
diejenige Anhängerachse (69, 70) mit dem aktuell geringsten Schlupf (38) als aktuelle Stellachse (69) bestimmt wird,
- für die Stellachse (69) ein Anhänger-Differenzschlupfwert (74) entsprechend der Differenz des Schlupfs (38) der Referenzachse des Kraftfahrzeugs (2) und des Schlupfs (38) der Stellachse (69) des Anhängefahrzeugs (57) ermittelt und durch Einstellung eines Anhänger-Bremsdrucks (P-A) dem Soll-Differenzschlupfwert (53) nachgeführt wird,
- an den Radbremsen (6) der übrigen, von der Stellachse (69) verschiedenen Anhängerachsen (70) die Einlassventile (22) der jeweiligen Drucksteuerventile (20) nach einem Startzeitpunkt (t1) nach Vorgabe einer externen Bremsanforderung (30) geschlossen werden.

13. Verfahren nach Anspruch 12,
**dadurch gekennzeichnet, dass**
der geschlossene Schaltzustand (75) der Einlassventile (22) beendet und wieder eingeschaltet wird in Abhängigkeit einer Bewertung (83) des zeitlichen Verlaufs des Anhänger-Differenzschlupfs (82) entsprechend der Differenz des Schlupfs (38) der jeweiligen Anhängerachse (70) und dem Schlupf (38) der Stellachse (69) mit wenigstens einer vorgegebenen Schaltschwelle (77, 78, 79) des Anhänger-Differenzschlupfs (82).

14. Verfahren nach Anspruch 13,
**dadurch gekennzeichnet, dass**
als erste Schaltschwellen (77) ein Erreichen und Überschreiten einer Nulllinie (86) des Anhänger-Differenzschlupfs (82) um einen Toleranzschlupfwert (80) vorgegeben wird und bei Erreichen des Toleranzschlupfwerts (80) der Schaltzustand (75) der Einlassventile (22) gewechselt wird.

15. Verfahren nach Anspruch 14,
**dadurch gekennzeichnet, dass**
nachdem der Anhänger-Differenzschlupf (82) die erste Schaltschwelle (77) erreicht eine Tendenz (88) der Bremsanforderung (externe Bremsanforderung (30) oder resultierende Bremsanforderung (56)) berücksichtigt und im Fall abnehmender Bremsanforderung (30, 56) ein erweiterter Toleranzbereich (89) für den Anhänger-Differenzschlupf (82) vorgegeben und die Einlassventile (22) der Anhängerachsen (70) abgesehen von der Regelachse (69) bis zum Verlassen des erweiterten Toleranzbereichs (89) geschlossen gehalten werden.

16. Verfahren nach einem der Ansprüche 13 bis 15,
**dadurch gekennzeichnet, dass**
für den Fall eines nach dem Schließen der Einlassventile (22) zunehmenden Anhänger-Differenzschlupfs (82) ein Anfangswert (91) des Anhänger-Differenzschlupfs (82) zum Startzeitpunkt (t1) des Schließens der Einlassventile (22) zur Bestimmung einer Schaltschwelle (78, 79) herangezogen wird, wobei eine zweite Schaltschwelle (78) als Summe eine Zunahme des Anfangswerts (91) des Anhänger-Differenzschlupfs (82) zum Zeitpunkt (t1) des Schließens der Einlassventile (22) um einen vorgegeben Anteil dieses Anfangswerts (91) oder einen vorgegebenen Toleranzschlupfwert (80) bestimmt wird.

17. Verfahren nach Anspruch 16,
**dadurch gekennzeichnet, dass**
für den Fall eines nach dem Schließen der Einlassventile (22) um mindestens einen vorgegebenen Toleranzschlupfwert (80) geringer werdenden Betrag des Anhänger-Differenzschlupfs (82) als dritte Schaltschwelle (79) der Anfangswert (91) des Anhänger-Differenzschlupfs (82) zum Startzeitpunkt (t1) des Schließens der Einlassventile (22) vorgegeben wird.

18. Verfahren nach einem der Ansprüche 13 bis 17,
**dadurch gekennzeichnet, dass**
der Anhänger-Bremsdruck (P-A) von der Bremssteuereinheit (21) über ein Anhänger-Drucksteuerventil (68) einstellbar ist, welches an ein Anhängerkontrollventil (60) angeschlossen ist.

19. Bremsanlage eines Kraftfahrzeugs (2) oder eines Fahrzeuggespanns (64, 65) aus einem Kraftfahrzeug (2) als Zugfahrzeug (2) und wenigstens einem Anhängefahrzeug (57) zur Durchführung des Verfahrens nach einem der Ansprüche 1 bis 18, mit pro Rad (5) einem Bremszylinder (7) und einem Drucksteuerventil (20), die zum Empfang von Steuersignalen (31, 32) während eines Drucksteuermodus (24) mit einer Bremssteuereinheit (21) signalübertragend verbunden sind, sowie einem vom Fahrer des Fahrzeugs (2) betätigbaren Betriebsbremsventils (10) und einem Bremssignalgeber (43), wobei die Bremsdrücke (P) in den Bremszylindern (7) in einem Normalbremsmodus (18) in Abhängigkeit einer Fahrerbremsanforderung (19) durch Betätigung des Betriebsbremsventils (10) und in einem Drucksteuermodus (24) über das jeweilige Drucksteuerventil (20) von der Bremssteuereinheit (21) einstellbar sind, wobei die Bremssteuereinheit (21) zum Empfang von der Fahrerbremsanforderung unabhängiger externer Bremsanforderungen (30) ausgebildet ist und mit Drehzahlsensoren (29) der Räder (5) zur Erfassung des Drehverhaltens und zur Überwachung der Blockierneigung der Räder (5) des Fahrzeugs anhand der Messsignale (34) der Drehzahlsensoren (29) verbunden ist und bei Ermittlung einer Blockierneigung wenigstens eines Rades (5) und/oder Empfang einer externen Bremsanforderung (30) die Einstellung des Bremsdrucks (P) im Drucksteuermodus (24) übernimmt,
**dadurch gekennzeichnet, dass**
die Bremssteuereinheit (21) zur laufenden Ermittlung von Differenzschlupfwerten (42) aus den Messsignalen (34) der Drehzahlsensoren (29) als Differenz zwischen dem Schlupf (38) zweier Achsen (3, 4) des Fahrzeugs (2) und zur Bewertung (45) und Nachführung des Differenzschlupfwerts (42) nach einem vorgegebenen oder ermittelten Soll- Differenzschlupfwert (53) durch Anpassung der Steuersignale (31, 32) konfiguriert ist.

20. Bremsanlage eines Fahrzeuggespanns (64, 65) nach Anspruch 19,
**dadurch gekennzeichnet, dass**
das Anhängefahrzeug (57) ein elektronisches Bremsmodul (66) zur Ansteuerung der Drucksteuerventile (20) seiner Anhängerachsen (69, 70) aufweist, welches mit der Bremssteuereinheit (21) signalübertragend verbunden ist.

21. Bremsanlage nach Anspruch 19 oder 20,
**dadurch gekennzeichnet, dass**
die Drucksteuerventile (20, 68) jeweils ein Einlassventil (22) zur Erhöhung des Bremsdrucks (P, P-A) und ein Auslassventil (23) zur Senkung des Bremsdrucks (P, P-A) umfassen.

22. Bremsanlage nach einem der Ansprüche 19 bis 21,
**dadurch gekennzeichnet, dass**
die Drucksteuerventile (20, 68) in einem oder mehreren Bremskreisen (13, 14, 63) angeordnet sind, welche über jeweils ein Aktivierungsventil (25) mit einem Druckmittelvorrat (12, 15, 27) verbindbar sind, wobei jedes Aktivierungsventil (25) elektrisch an die Bremssteuereinheit (21) angeschlossen und schaltbar ist.

23. Bremsanlage nach einem der Ansprüche 19 bis 22,
**dadurch gekennzeichnet, dass**
die Drucksteuerventile (20) der Räder (5) einer Achse (3, 4) des Fahrzeugs (2) über einen gemeinsamen Bremskreis (13, 14) mit einem Aktivierungsventil (25) mit einem Druckmittelvorrat (12, 15) verbunden sind.

24. Bremsanlage nach einem der Ansprüche 19 bis 23,
**dadurch gekennzeichnet, dass**
ein zusätzliches Anhänger-Drucksteuerventil (68) von der Bremssteuereinheit (21) ansteuerbar ist, welches an ein Anhängerkontrollventil (60) angeschlossen ist.

25. Fahrzeug mit einer Bremsanlage nach einem der Ansprüche 19 bis 24, zur Durchführung eines Verfahrens nach einem der Ansprüche 1 bis 18.

26. Fahrzeug nach Anspruch 25,
**dadurch gekennzeichnet, dass**
das Fahrzeug (2) ein Kraftfahrzeug, ein Anhängefahrzeug (57) eines Kraftfahrzeugs als Zugfahrzeug und/oder ein Fahrzeuggespann (64, 65) aus Zugfahrzeug und wenigstens einem Anhängefahrzeug (57) ist.

## Claims

1. Method for adjusting brake pressures (P) at pneumatically actuated wheel brakes (6) of a vehicle (2), wherein a brake pressure (P) at the wheel brakes (6) is adjusted in a normal braking mode (18) depending on a driver's braking demand (19) determined by the driver of the vehicle (2), and wherein, when an external braking demand (30) independent of the driver's braking demand (19) is received and/or when certain wheels (5) tend to lock, a brake control unit (21) takes over the adjustment of the brake pressure (P) in a pressure control mode (24), wherein the brake control unit (21), in the pressure control mode (24), ascertains control signals (31, 32) for pressure control valves (20) of the particular wheel brakes (6) and changes the brake pressure (P) of the relevant wheel brake (6) by controlling the pressure control valves (20),
**characterized in that**
after an external braking demand (30) before releasing (40) the control signals (31, 32) for the respective pressure control valves (20), the brake control unit (21), in the pressure control mode (24), continuously ascertains at least one differential slip value (42) from measuring signals (34) supplied by speed sensors (29) of the wheels (5), as the difference between the slip (38) of two axles (3, 4) of the vehicle (2), and evaluates the differential slip value with consideration for a predefined or adjustable setpoint differential slip value (53) and, depending on the evaluation (45), brings the differential slip value (42) closer to the setpoint differential slip value (53) by adapting at least one control signal (31, 32).

2. The method according to Claim 1,
**characterized in that**
during the readjustment of the differential slip value (42) in order to increase the brake pressure (P) of a wheel brake (6), the control signal (31) of an inlet valve (22) of the particular pressure control valve (20), and/or in order to decrease the brake pressure (P), the control signal (32) of an outlet valve (23) of the particular pressure control valve (20), and/or the control signal (31, 32) of an inlet valve (22) or outlet valve (23) acting on a wheel brake (6) of the respective other axle (3, 4) is changed.

3. Method according to Claim 1 or 2,
**characterized in that**
the brake control unit (21) reduces the brake pressure (P) at the axle (3, 4) of the compared pair of axles (3, 4) having the greater slip (38), with consideration for the evaluation (45) of the differential slip value (42) .

4. Method according to one of the preceding claims,
**characterized in that**
the brake control unit (21) evaluates the at least one ascertained differential slip value (42) with consideration for at least one control intervention criterion (46) and, depending on the fulfillment of the control intervention criterion (46) releases the control signals (31, 32) or adapts at least one control signal (31, 32) for readjusting the differential slip value (42).

5. Method according to Claim 4,
**characterized in that**
at least one slip threshold value (47, 48, 49) is imposed to the brake control unit (21) as a control intervention criterion (46) for the evaluation (45) of the differential slip value (42) and, if the slip threshold value (47, 48, 49) is exceeded, an adaptation of the distribution of the brake pressure (P) to the axles (3, 4) takes place.

6. Method according to Claim 4 or 5,
**characterized in that**
a tolerance range (50, 51) comprising an upper slip threshold value (48) and a lower slip threshold value (49) is imposed to the brake control unit (21) as a control intervention criterion (46) for the evaluation (45) of the differential slip value (42) and, if the upper slip threshold value (48) is exceeded or the lower slip threshold value (49) is fallen below, an adaptation of the distribution of the brake pressure (P) to the axles (3, 4) takes place.

7. Method according to Claim 6,
**characterized in that**
a first tolerance range (50) having slip threshold values (48, 49) is specified for a braking operation having active retarders and a second tolerance range (51) having slip threshold values (48', 49') is specified for a braking operation without retarders.

8. Method according to one of the preceding claims,
**characterized in that**
differential slip values (42) are determined for multiple axles (3, 4), in each case based on a reference axle (3) taken into account in all axle pairs.

9. Method according to one of the preceding claims,
**characterized in that**
the differential slip value (42) is controlled with the predefined or adjustable setpoint differential slip value (53) as the guide variable.

10. Method according to one of the preceding claims,
**characterized by**
a specification (55) of the setpoint differential slip value (53) depending on a braking demand (56) resulting from an external braking demand (30) and a driver's braking demand (19).

11. Method according to one of Claims 1 to 10,
**characterized by**
a specification (55) of the setpoint differential slip value (53) depending on an actual deceleration (Z-ist) of the vehicle (2).

12. Method according to one of Claims 8 to 11,
**characterized in that**
in order to determine the brake pressures (P, P-A) in a vehicle combination (65) comprising a motor vehicle (2) and at least one towed vehicle (57)
- the trailer axle (69, 70) having the least slip (38) at the moment is continuously determined as the present control axle (69)
from measuring signals (34) of the speed sensors (29) of the wheels (5) of the towed vehicle (57),
- a trailer differential slip value (74) is ascertained for the control axle (69) according to the difference of the slip (38) of the reference axle of the motor vehicle (2) and the slip (38) of the control axle (69) of the towed vehicle (57) and is brought closer to the setpoint differential slip value (53) by adjusting a trailer brake pressure (P-A),
- at the wheel brakes (6) of the remaining trailer axles (70) that differ from the control axle (69), the inlet valves (22) of the particular pressure control valves (20) are closed after a start point (t1) according to the requirement of an external braking demand (30).

13. Method according to Claim 12,
**characterized in that**
the closed switching state (75) of the inlet valves (22) is concluded and is activated again depending on an evaluation (83) of the temporal progression of the trailer differential slip (82) according to the difference of the slip (38) of the particular trailer axle (70) and the slip (38) of the control axle (69) having at least one predefined switching threshold (77, 78, 79) of the trailer differential slip (82).

14. Method according to Claim 13,
**characterized in that**
a reaching and exceeding of a zero line (86) of the trailer differential slip (82) by a tolerance slip value (80) is specified as the first switching threshold (77) and the switching state (75) of the inlet valves (22) is switched when the tolerance slip value (80) is reached.

15. Method according to Claim 14,
**characterized in that**
after the trailer differential slip (82) has reached the first switching threshold (77), a tendency (88) of the braking demand (external braking demand (30) or resultant braking demand (56)) is taken into account and, in the case of a decreasing braking demand (30, 56), an expanded tolerance range (89) for the trailer differential slip (82) is specified and the inlet valves (22) of the trailer axles (70), except for the control axle (69), are held closed until the expanded tolerance range (89) is exited.

16. Method according to one of the Claims 13 to 15,
**characterized in that**
for the case of an increasing trailer differential slip (82) after the closure of the inlet valves (22), an initial value (91) of the trailer differential slip (82) at the start point (t1) of the closure of the inlet valves (22) is utilized for determining a switching threshold (78, 79), wherein a second switching threshold (78) is determined as the sum of an increase in the initial value (91) of the trailer differential slip (82) at the point in time (t1) of the closure of the inlet valves (22) by a predefined portion of this initial value (91) or a predefined tolerance slip value (80).

17. Method according to Claim 16,
**characterized in that**
for the case of an absolute value of the trailer differential slip (82) decreasing by at least a predefined tolerance slip value (80) after the closure of the inlet valves (22), the initial value (91) of the trailer differential slip (82) at the start point (t1) of the closure of the inlet valves (22) is specified as the third switching threshold (79).

18. Method according to one of the Claims 13 to 17,
**characterized in that**
the trailer brake pressure (P-A) is adjustable by the brake control unit (21) via a trailer pressure control valve (68), which is connected to a trailer control valve (60).

19. Braking system of a motor vehicle (2) or a vehicle combination (64, 65) comprising a motor vehicle (2) as the towing vehicle (2) and at least one towed vehicle (57), for carrying out the method according to one of Claims 1 to 18, comprising, per wheel (5), one brake cylinder (7) and one pressure control valve (20), which are connected to a brake control unit (21) in a signal-transmitting manner in order to receive control signals (31, 32) during a pressure control mode (24), and a service-brake valve (10) which can be actuated by a driver of the vehicle (2), and a brake signal emitter (43), wherein the brake pressures (P) in the brake cylinders (7) are adjustable by the brake control unit (21), in a normal braking mode (18), depending on a driver's braking demand (19), by actuating the service-brake valve (10) and, in a pressure-control mode (24), via the particular pressure control valve (20), wherein the brake control unit (21) is designed for receiving external braking demands (30) which are independent of the driver's braking demand and is connected to speed sensors (29) of the wheels (5) for detecting the rotational behavior and for monitoring the tendence of the wheels (5) of the vehicle to lock on the basis of the measuring signals (34) of the speed sensors (29) and, upon determination of a tendency of at least one wheel (5) to lock and/or upon reception of an external braking demand (30), takes over the adjustment of the brake pressure (P) in the pressure control mode (24),
**characterized in that**
the brake control unit (21) is configured for continuously determining differential slip values (42) from the measuring signals (34) of the speed sensors (29) as the difference between the slip (38) of two axles (3, 4) of the vehicle (2) and for evaluating (45) and readjusting the differential slip value (42) according to one predefined or ascertained setpoint differential slip value (53) by adapting the control signals (31, 32).

20. Braking system of a vehicle combination (64, 65) according to Claim 19,
**characterized in that**
the towed vehicle (57) comprises an electronic brake module (66) for controlling the pressure control valves (20) of its trailer axles (69, 70), which is connected in a signal-transmitting manner to the brake control unit (21).

21. Braking system according to Claim 19 or 20,
**characterized in that**
the pressure control valves (20, 68) each comprise an inlet valve (22) for increasing the brake pressure (P, P-A) and an outlet valve (23) for decreasing the brake pressure (P, P-A).

22. Braking system according to one of Claims 19 to 21,
**characterized in that**
the pressure control valves (20, 68) are situated in one or multiple brake circuits (13, 14, 63) which can each be connected to a pressure medium supply (12, 15, 27) via an activating valve (25) in each case, wherein each activating valve (25) is electrically connected to the brake control unit (21) and is switchable.

23. Braking system according to one of Claims 19 to 22,
**characterized in that**
the pressure control valves (20) of the wheels (5) of one axle (3, 4) of the vehicle (2) are connected to a pressure medium supply (12, 15) via a shared brake circuit (13, 14) comprising an activating valve (25).

24. Braking system according to one of Claims 19 to 23,
**characterized in that**
an additional trailer pressure control valve (68), which is connected to a trailer control valve (60), can be controlled by the brake control unit (21).

25. Vehicle comprising a braking system according to one of Claims 19 to 24, for carrying out a method according to one of Claims 1 to 18.

26. Vehicle according to Claim 25,
**characterized in that**
the vehicle (2) is a motor vehicle, a towed vehicle (57) of a motor vehicle as the towing vehicle, and/or a vehicle combination (64, 65) comprising a towing vehicle and at least one towed vehicle (57).

## Revendications

1. Procédé pour ajuster des pressions de freinage (P) au niveau de freins de roues (6) à commande pneumatique d'un véhicule (2), une pression de freinage (P) au niveau des freins de roues (6) étant ajustée dans un mode de freinage normal (18) en fonction d'une demande de freinage du conducteur (19) définie par le conducteur du véhicule (2), et une unité de commande de frein (21), à la réception d'une demande de freinage externe (30) indépendante de la demande de freinage du conducteur (19) et/ou en présence d'une tendance au blocage de certaines roues (5), reprenant l'ajustement de la pression de freinage (P) dans un mode de commande de pression (24), l'unité de commande de frein (21), dans le mode de commande de pression (24), évaluant des signaux de commande (31, 32) pour des soupapes de commande de pression (20) des freins de roues respectifs (6) et, par commande de pilotage des soupapes de commande de pression (20), modifiant la pression de freinage (P) du frein de roue concerné (6),
**caractérisé en ce que** l'unité de commande de frein (21), en mode de commande de pression (24), en fonction d'une demande de freinage externe (30), avant une libération (40) des signaux de commande (31, 32) pour les soupapes de commande de pression concernées (20), évalue en continu, à partir de signaux de mesure (34) provenant de capteurs de vitesse de rotation (29) des roues (5), au moins une valeur de patinage différentielle (42) en tant que différence entre le patinage respectif (38) de deux essieux (3, 4) du véhicule (2) et analyse celle-ci en tenant compte d'une valeur de patinage différentielle de consigne (53) prédéfinie ou pouvant être ajustée, et, en fonction de l'analyse (45), asservit la valeur de patinage différentielle (42) par adaptation d'au moins un signal de commande (31, 32) à la valeur de patinage différentielle de consigne (53).

2. Procédé selon la revendication 1,
**caractérisé en ce que**
lors de l'asservissement de la valeur de patinage différentielle (42) pour augmenter la pression de freinage (P) d'un frein de roue (6), le signal de commande (31) d'une soupape d'entrée (22) de la soupape de commande de pression respective (20) est modifié et/ou pour abaisser la pression de freinage (P), le signal de commande (32) d'une soupape de sortie (23) de la soupape de commande de pression respective (20) est modifié et/ou le signal de commande (31, 32) d'une soupape d'entrée (22) ou d'une soupape de sortie (23) agissant sur un frein de roue (6) de l'autre essieu respectif (3, 4) est modifié.

3. Procédé selon la revendication 1 ou 2,
**caractérisé en ce que**
l'unité de commande de frein (21), en tenant compte de l'analyse (45) de la valeur de patinage différentielle (42), réduit la pression de freinage (P) au niveau de l'essieu (3, 4) de la paire d'essieux comparée (3, 4) présentant le plus grand patinage (38).

4. Procédé selon l'une quelconque des revendications précédentes,
**caractérisé en ce que**
l'unité de commande de frein (21) analyse l'au moins une valeur de patinage différentielle (42) évaluée en tenant compte d'au moins un critère d'intervention de réglage (46) et, en fonction de la satisfaction du critère d'intervention de réglage (46), libère les signaux de commande (31, 32) ou adapte au moins un signal de commande (31, 32) pour l'asservissement de la valeur de patinage différentielle (42).

5. Procédé selon la revendication 4,
**caractérisé en ce**
**qu'**au moins une valeur de seuil de patinage (47, 48, 49) est prédéfinie pour l'unité de commande de frein (21) en tant que critère d'intervention de réglage (46) pour l'analyse (45) de la valeur de patinage différentielle (42) et en cas de dépassement de la valeur de seuil de patinage (47, 48, 49), il se produit une adaptation de la distribution de la pression de freinage (P) sur les essieux (3, 4).

6. Procédé selon la revendication 4 ou 5,
**caractérisé en ce**
**qu'**une bande de tolérances (50, 51) avec une valeur de seuil de patinage supérieure (48) et une valeur de seuil de patinage inférieure (49) est prédéfinie pour l'unité de commande de frein (21) en tant que critère d'intervention de réglage (46) pour l'analyse (45) de la valeur de patinage différentielle (42), et en cas de dépassement de la valeur de seuil de patinage supérieure (48) ou de sous dépassement de la valeur de seuil de patinage inférieur (49), il se produit une adaptation de la distribution de la pression de freinage (P) sur les essieux (3, 4).

7. Procédé selon la revendication 6,
**caractérisé en ce**
**qu'**une première bande de tolérances (50) est prédéfinie avec des valeurs de seuil de patinage (48, 49) pour un mode de freinage avec freinage durable actif, et une deuxième bande de tolérances (51) est prédéfinie avec des valeurs de seuil de patinage (48', 49') pour un mode de freinage sans freinage durable.

8. Procédé selon l'une quelconque des revendications précédentes,
**caractérisé en ce que**
des valeurs de patinage différentielles (42) pour plusieurs essieux (3, 4) sont évaluées à chaque fois par rapport à un essieu de référence (3) considéré dans toutes les paires d'essieux.

9. Procédé selon l'une quelconque des revendications précédentes,
**caractérisé en ce que**
la valeur de patinage différentielle (42) est réglée avec la valeur de patinage différentielle de consigne prédéfinie ou ajustable (53) en tant que grandeur de référence.

10. Procédé selon l'une quelconque des revendications précédentes,
**caractérisé par**
un établissement préalable (55) de la valeur de patinage différentielle de consigne (53) en fonction d'une demande de freinage (56) résultant d'une demande de freinage externe (30) et d'une demande de freinage du conducteur (19).

11. Procédé selon l'une quelconque des revendications 1 à 10,
**caractérisé par**
un établissement préalable (55) de la valeur de patinage différentielle de consigne (53) en fonction d'une décélération instantanée (Z-ist) du véhicule (2).

12. Procédé selon l'une quelconque des revendications 8 à 11,
**caractérisé en ce que**
pour déterminer la pression de freinage (P, P-A) dans un attelage de véhicules (65) constitué d'un véhicule automobile (2) et d'au moins un véhicule remorque (57),
- on détermine en continu à partir de signaux de mesure (34) des capteurs de vitesse de rotation (29) des roues (5) du véhicule remorque (57), l'essieu de remorque (69, 70) ayant le patinage actuellement le moins important (38) en tant qu'essieu de réglage actuel (69),
- pour l'essieu de réglage (69), une valeur de patinage différentielle de remorque (74) est évaluée en fonction de la différence du patinage (38) de l'essieu de référence du véhicule automobile (2) et du patinage (38) de l'essieu de réglage (69) du véhicule remorque (57) et est asservie par ajustement d'une pression de freinage de remorque (P-A) à la valeur de patinage différentielle de consigne (53),
- au niveau des freins de roues (6) des autres essieux de remorque (70) différents de l'essieu de réglage (69), les soupapes d'entrée (22) des soupapes de commande de pression (20) respectives sont fermées après un instant de commencement (t1) en fonction d'un établissement préalable d'une demande de freinage externe (30).

13. Procédé selon la revendication 12,
**caractérisé en ce que**
l'état de commutation fermé (75) des soupapes d'entrée (22) est désactivé et à nouveau activé en fonction d'une analyse (83) de l'allure dans le temps du patinage différentiel de la remorque (82) en fonction de la différence du patinage (38) de l'essieu de remorque respectif (70) et du patinage (38) de l'essieu de réglage (69) avec au moins un seuil de commutation prédéfini (77, 78, 79) du patinage différentiel de la remorque (82).

14. Procédé selon la revendication 13,
**caractérisé en ce que**
l'on prédéfinit en tant que premiers seuils de commutation (77) une atteinte et un dépassement d'une ligne zéro (86) du patinage différentiel de la remorque (82) d'une valeur de patinage de tolérance (80), et à l'obtention de la valeur de patinage de tolérance (80), l'état de commutation (75) des soupapes d'entrée (22) est inversé.

15. Procédé selon la revendication 14,
**caractérisé en ce**
**qu'**après que le patinage différentiel de la remorque (82) a atteint le premier seuil de commutation (77), on tient compte d'une tendance (88) de la demande de freinage (demande de freinage externe (30) ou demande de freinage résultante (56)) et dans le cas d'une demande de freinage diminuant (30, 56), une plage de tolérance élargie (89) pour le patinage différentiel de la remorque (82) est prédéfinie et les soupapes d'entrée (22) des essieux de remorque (70), indépendamment de l'essieu de réglage (69), sont maintenues fermées jusqu'au moment de la sortie hors de la plage de tolérance élargie (89).

16. Procédé selon l'une quelconque des revendications 13 à 15,
**caractérisé en ce que**
dans le cas d'un patinage différentiel de la remorque (82) augmentant après la fermeture des soupapes d'entrée (22), une valeur de départ (91) du patinage différentiel de la remorque (82) à l'instant de commencement (t1) de la fermeture des soupapes d'entrée (22) est utilisée pour déterminer un seuil de commutation (78, 79), un deuxième seuil de commutation (78) en tant que somme d'une augmentation de la valeur de départ (91) du patinage différentiel de la remorque (82) à l'instant (t1) de la fermeture des soupapes d'entrée (22) d'une proportion prédéfinie de cette valeur de départ (91) ou une valeur de patinage de tolérance prédéfinie (80) est déterminée.

17. Procédé selon la revendication 16,
**caractérisé en ce que**
dans le cas d'une valeur du patinage différentiel de la remorque (82) devenant plus faible après la fermeture des soupapes d'entrée (22) d'au moins une valeur de patinage de tolérance prédéfinie (80), la valeur de départ (91) du patinage différentiel de la remorque (82) à l'instant de commencement (t1) de la fermeture des soupapes d'entrée (22) est prédéfinie en tant que troisième seuil de commutation (79).

18. Procédé selon l'une quelconque des revendications 13 à 17,
**caractérisé en ce que**
la pression de freinage de la remorque (P-A) peut être ajustée par l'unité de commande de frein (21) par le biais d'une soupape de commande de pression de la remorque (68) qui est raccordée à une soupape de contrôle de la remorque (60).

19. Installation de freinage d'un véhicule automobile (2) ou d'un attelage de véhicules (64, 65) constitué d'un véhicule automobile (2) en tant que véhicule tracteur (2) et d'au moins un véhicule remorque (57) pour mettre en oeuvre le procédé selon l'une quelconque des revendications 1 à 18, comprenant, pour chaque roue (5), un cylindre de frein (7) et une soupape de commande de pression (20) qui sont connectés par transmission de signaux à une unité de commande de frein (21) pour recevoir des signaux de commande (31, 32) pendant un mode de commande de pression (24), et une soupape de frein de service (10) pouvant être activée par le conducteur du véhicule (2) et un détecteur de signal de freinage (43), les pressions de freinage (P) dans les cylindres de frein (7) pouvant être ajustées par l'unité de commande de frein (21) en mode de freinage normal (18) en fonction d'une demande de freinage du conducteur (19) par un actionnement de la soupape de frein de service (10) et en mode de commande de pression (24) par le biais de la soupape de commande de pression respective (20), l'unité de commande de frein (21) étant réalisée pour recevoir des demandes de freinage externes (30) indépendantes de la demande de freinage du conducteur, et étant connectée à des capteurs de vitesse de rotation (29) des roues (5) pour détecter le comportement de rotation et pour contrôler la tendance au blocage des roues (5) du véhicule à l'aide des signaux de mesure (34) des capteurs de vitesse de rotation (29), et en cas d'évaluation d'une tendance au blocage d'au moins une roue (5) et/ou en cas de réception d'une demande de freinage externe (30), reprenant l'ajustement de la pression de freinage (P) en mode de commande de pression (24),
**caractérisée en ce que**
l'unité de commande de frein (21) est configurée pour l'évaluation en continu de valeurs de patinage différentielles (42) à partir des signaux de mesure (34) des capteurs de vitesse de rotation (29) en tant que différence entre le patinage (38) de deux essieux (3, 4) du véhicule (2) et pour l'analyse (45) et l'asservissement de la valeur de patinage différentielle (42) en fonction d'une valeur de patinage différentielle de consigne prédéfinie ou évaluée (53) par adaptation des signaux de commande (31, 32).

20. Installation de freinage d'un attelage de véhicules (64, 65) selon la revendication 19,
**caractérisée en ce que**
le véhicule remorque (57) présente un module de freinage électronique (66) pour commander par pilotage les soupapes de commande de pression (20) de ses essieux de remorque (69, 70), lequel est connecté par transmission de signaux à l'unité de commande de frein (21).

21. Installation de freinage selon la revendication 19 ou 20,
**caractérisée en ce que**
les soupapes de commande de pression (20, 68) comprennent à chaque fois une soupape d'entrée (22) pour augmenter la pression de freinage (P, P-A) et une soupape de sortie (23) pour abaisser la pression de freinage (P, P-A).

22. Installation de freinage selon l'une quelconque des revendications 19 à 21,
**caractérisée en ce que**
les soupapes de pression de commande (20, 68) sont disposées dans un ou plusieurs circuits de freinage (13, 14, 63) qui peuvent être connectés par le biais d'une soupape d'activation respective (25) à un réservoir de fluide sous pression (12, 15, 27), chaque soupape d'activation (25) étant raccordée électriquement à l'unité de commande de frein (21) et pouvant être commutée.

23. Installation de freinage selon l'une quelconque des revendications 19 à 22,
**caractérisée en ce que**
les soupapes de commande de pression (20) des roues (5) d'un essieu (3, 4) du véhicule (2) sont connectées par le biais d'un circuit de freinage commun (13, 14) avec une soupape d'activation (25) à un réservoir de fluide sous pression (12, 15).

24. Installation de freinage selon l'une quelconque des revendications 19 à 23,
**caractérisée en ce que**
une soupape de commande de pression de remorque supplémentaire (68) peut être commandée par pilotage par l'unité de commande de frein (21) et est raccordée à une soupape de contrôle de remorque (60).

25. Véhicule comprenant une installation de freinage selon l'une quelconque des revendications 19 à 24 pour mettre en oeuvre un procédé selon l'une quelconque des revendications 1 à 18.

26. Véhicule selon la revendication 25,
**caractérisé en ce que**
le véhicule (2) est un véhicule automobile, un véhicule remorque (57) d'un véhicule automobile en tant que véhicule tracteur et/ou un attelage de véhicules (64, 65) constitué d'un véhicule tracteur et d'au moins un véhicule remorque (57).
